# EUROPEAN PATENT SPECIFICATION

(11) **EP 4 140 857 B1**
(45) Date of publication and mention of the grant of the patent: **26.06.2024**
(21) Application number: 21792637.7
(22) Date of filing: 25.02.2021
(51) Int. Cl.: B62D 1/16, B62D 5/00, B62D 5/04, B62D 7/15, B62D 7/09

(54) **VEHICLE STEERING DEVICE AND VEHICLE**
FAHRZEUGLENKVORRICHTUNG UND FAHRZEUG
DISPOSITIF DE DIRECTION DE VÉHICULE ET VÉHICULE

(30) Priority: 23.04.2020 CN 202010328152
(43) Date of publication of application: 01.03.2023
(73) Proprietor: Huawei Technologies Co., Ltd., Shenzhen, Guangdong 518129 (CN)
(72) Inventor: LI, Jie, Shenzhen, Guangdong 518129 (CN); LIU, Fengyu, Shenzhen, Guangdong 518129 (CN); HUANG, Xin, Shenzhen, Guangdong 518129 (CN); REN, Xin, Shenzhen, Guangdong 518129 (CN)
(74) Representative: Thun, Clemens
(86) International application number: PCT/CN2021/077855
(87) International publication number: WO 2021/213001

(56) References cited:
- CN-A- 103 661 578
- CN-A- 108 177 687
- CN-A- 110 696 912
- CN-U- 209 795 598
- CN-U- 210 011 791
- JP-B2- 5 958 257
- US-B2- 7 308 964

## Description

### TECHNICAL FIELD

This application relates to the field of vehicle technologies, and in particular, to a vehicle steering apparatus and a vehicle

### BACKGROUND

A vehicle steering apparatus is an important part of a vehicle chassis. The vehicle steering apparatus usually includes an upper steering system and a lower steering system. The upper steering system is a steering control mechanism including a steering wheel. The lower steering system includes a left front wheel steering subsystem and a right front wheel steering subsystem that are steering actuators of a left front wheel and a right front wheel.

In the related technology, as automated driving systems become increasingly advanced, people are gradually freed from driving behavior. Steer-by-wire is a trend product that completely frees people from the driving behavior. In a vehicle steering apparatus in which the steer-by-wire is used, there is no mechanical connection between an upper steering system and a lower steering system. A controller receives a steering signal (for example, a rotation angle of a steering wheel) of the upper steering system, and then the controller generates a steering instruction based on the steering signal, and sends the steering instruction to the lower steering system, so that the lower steering system performs a steering action.

In a process of implementing this application, the inventor finds that the related technology has at least the following problem:

Due to lack of mechanical connection between the upper steering system and the lower steering system, when power of the lower steering system is ineffective, a vehicle will completely lose a steering function. Document US 7,308,964 B2 shows a vehicle steering apparatus comprising an upper steering system connected to a steering wheel and a lower steering system connected to the vehicle road wheels. The upper steering system and the lower steering system are connected by a primary electric connection and a backup connection using wires. The lower steering system comprises a left wheel clutch and a right wheel clutch.

### SUMMARY

The present invention is defined by the independent claims. Further advantageous developments are shown by the dependent claims.

This application provides a vehicle steering apparatus and a vehicle A transmission assembly is additionally disposed between an upper steering system and a lower steering system in the vehicle steering apparatus. The upper steering system, the lower steering system, and the transmission assembly are connected to each other by using clutches. In this way, when power of the lower steering system is effective, the upper steering system may be mechanically decoupled from the lower steering system. When power of the lower steering system is ineffective, the upper steering system may be mechanically connected to the lower steering system, so that the upper steering system provides steering power. The technical solutions of the vehicle steering apparatus and the vehicle may be described as follows:

According to a first aspect, a vehicle steering apparatus is provided. The vehicle steering apparatus includes an upper steering system, a lower steering system, a front wheel steering transmission assembly, an intermediate clutch, a left front clutch, and a right front clutch. The front wheel steering transmission assembly includes an intermediate transmission wheel, a left front transmission wheel, a right front transmission wheel, and a first transmission belt. The intermediate transmission wheel, the left front transmission wheel, and the right front transmission wheel are in transmission connection by using the first transmission belt. The lower steering system includes a left front wheel steering subsystem and a right front wheel steering subsystem. The upper steering system is connected to the intermediate transmission wheel by using the intermediate clutch. The left front wheel steering subsystem is connected to the left front transmission wheel by using the left front clutch. The right front wheel steering subsystem is connected to the right front transmission wheel by using the right front clutch.

The upper steering system is a control system for vehicle steering, and may also provide steering power in some scenarios.

The lower steering system is an execution system for vehicle steering. The lower steering system may include the left front wheel steering subsystem and the right front wheel steering subsystem that are respectively configured to perform steering actions of a left front wheel and a right front wheel. When the vehicle steering apparatus is a four-wheel steering apparatus, the lower steering system may further include a left rear wheel steering subsystem and a right rear wheel steering subsystem that are respectively configured to perform steering actions of a left rear wheel and a right rear wheel.

The front wheel steering transmission assembly includes the intermediate transmission wheel, the left front transmission wheel, the right front transmission wheel, and the first transmission belt. The intermediate transmission wheel, the left front transmission wheel, and the right front transmission wheel are in transmission connection by using the first transmission belt. The front wheel steering transmission assembly is configured to transfer power between the upper steering system, the left front wheel steering subsystem, and the right front wheel steering subsystem. Specifically, when both the left front clutch and the right front clutch are in an engaged state, power may be transferred between the left front wheel steering subsystem and the right front wheel steering subsystem by using the front wheel steering transmission assembly. When all the intermediate clutch, the left front clutch, and the right front clutch are in an engaged state, power may be transferred between the upper steering system and the lower steering system. When all the intermediate clutch, the left front clutch, and the right front clutch are in a disengaged state, the upper steering system is mechanically decoupled from the front wheel steering transmission assembly, and the lower steering system is mechanically decoupled from the front wheel steering transmission assembly, so that the upper steering system is mechanically decoupled from the lower steering system.

The intermediate clutch, the left front clutch, and the right front clutch generally refer to all connecting apparatuses that can be engaged and disengaged, but not only refer to conventional clutches.

The vehicle steering apparatus may further include a controller for controlling vehicle steering. The controller may be electrically connected to the upper steering system, the left front wheel steering subsystem, the right front wheel steering subsystem, the intermediate clutch, the left front clutch, and the right front clutch, to control these components.

In the solution shown in this embodiment of this application, this embodiment of this application provides the vehicle steering apparatus. In the vehicle steering apparatus, the upper steering system is connected to the intermediate transmission wheel in the front wheel steering transmission assembly by using the intermediate clutch, the left front wheel steering subsystem is connected to the left front transmission wheel by using the left front clutch, and the right front wheel steering subsystem is connected to the right front transmission wheel by using the right front clutch. In this way, when both the left front wheel steering subsystem and the right front wheel steering subsystem are in a power failure state, all the intermediate clutch, the left front clutch, and the right front clutch may be controlled to be in an engaged state, so that the upper steering system is mechanically connected to the lower steering system. A driver may operate the upper steering system to provide steering power for the lower steering system. Therefore, when power of the lower steering system is ineffective, a vehicle does not lose a steering function.

In addition, when one of the left front wheel steering subsystem and the right front wheel steering subsystem is damaged, both the left front clutch and the right front clutch may be in an engaged state. In this way, steering power of a power-effective steering subsystem can be transferred to a power-ineffective steering subsystem by using the front wheel steering transmission assembly.

In addition, when both the left front wheel steering subsystem and the right front wheel steering subsystem are in a power-effective state, all the intermediate clutch, the left front clutch, and the right front clutch may be in a disengaged state. In this way, the left front wheel steering subsystem and the right front wheel steering subsystem may independently control steering of corresponding wheels, to avoid mutual interference. Furthermore, the vehicle steering apparatus is also enabled to implement different Ackermann angles, so that the vehicle turns more stably. Different Ackermann angles may be used in different scenarios (that is, steering angles of two wheels are different). The Ackermann angle is designed to prevent the vehicle from side skidding when the vehicle turns. When the vehicle steering apparatus is designed, a turning angle of an inner wheel (relative to an apex) is slightly greater than that of an outer wheel, so that the two wheels have different angles and form an included angle, namely, the Ackermann angle. Such a design allows a vehicle body more stable when the vehicle turns quickly.

In the invention, an operating diameter of at least one of the left front transmission wheel and the right front transmission wheel is variable.

The operating diameter may also be referred to as a meshing diameter, a mating diameter, or the like of a transmission wheel and a transmission belt.

The controller may be connected to the left front drive wheel and the right front drive wheel, to control operating diameters of the left front drive wheel and the right front drive wheel.

In the solution shown in this embodiment of this application, the operating diameter of the left front transmission wheel and/or the right front transmission wheel may be adjusted, to change a transmission ratio of the left front transmission wheel to the right front transmission wheel. In this way, steering angles of the left front wheel and the right front wheel that are in any proportion may be implemented, so that a function of a variable Ackermann angle is implemented.

Specifically, the operating diameter of the left front transmission wheel may be variable, or the operating diameter of the right front transmission wheel may be variable, or the operating diameters of both the left front transmission wheel and the right front transmission wheel may be variable.

In a possible implementation, an operating diameter of the intermediate transmission wheel is variable.

In the solution shown in this embodiment of this application, in a process in which the operating diameter of the left front transmission wheel and/or the right front transmission wheel changes, tension of the first transmission belt changes, that is, a degree of tightness of the first transmission belt changes. Therefore, to keep the tension of the first transmission belt within an appropriate range, the intermediate transmission wheel may also be a transmission wheel with a variable operating diameter. In this way, when controlling a change of the operating diameter of the left front transmission wheel and/or the right front transmission wheel to adjust the transmission ratio, the controller may adaptively control a change of the operating diameter of the intermediate transmission wheel, so that the tension of the first transmission belt is kept within the appropriate range.

In a possible implementation, the lower steering system further includes a left rear wheel steering subsystem and a right rear wheel steering subsystem. The vehicle steering apparatus further includes a rear wheel steering transmission assembly, a left rear clutch, and a right rear clutch. The rear wheel steering transmission assembly includes a left rear transmission wheel, a right rear transmission wheel, and a second transmission belt. The left rear transmission wheel and the right rear transmission wheel are in transmission connection by using the second transmission belt. The left rear wheel steering subsystem is connected to the left rear transmission wheel by using the left rear clutch, and the right rear wheel steering subsystem is connected to the right rear transmission wheel by using the right rear clutch.

In the solution shown in this embodiment of this application, compared with a dual-wheel steering drive apparatus, a four-wheel vehicle steering apparatus controls steering angles of four wheels more precisely.

When both the left rear wheel steering subsystem and the right rear wheel steering subsystem are in a power-effective state, the left rear clutch and the right rear clutch may be controlled to be in a disengaged state, so that the left rear wheel steering subsystem and the right rear wheel steering subsystem independently control steering of corresponding wheels. When only one of the left rear wheel steering subsystem and the right rear wheel steering subsystem is in a power-effective state, the left rear clutch and the right rear clutch may be controlled to be engaged, so that steering power of a power-effective steering subsystem is transferred to a power-ineffective steering subsystem by using the rear wheel steering transmission assembly.

However, when power of both the left rear wheel steering subsystem and the right rear wheel steering subsystem is ineffective, the left rear wheel steering subsystem and the right rear wheel steering subsystem cannot be mechanically connected to the upper steering system. Therefore, the left rear wheel and the right rear wheel only follow steering.

In a possible implementation, an operating diameter of at least one of the left rear transmission wheel and the right rear transmission wheel is variable.

The controller may be connected to the left rear transmission wheel and the right rear transmission wheel, to control the operating diameters of the left rear transmission wheel and the right rear transmission wheel.

In the solution shown in this embodiment of this application, the operating diameter of the left rear transmission wheel and/or the right rear transmission wheel may be adjusted, to change a transmission ratio of the left rear transmission wheel to the right rear transmission wheel. In this way, steering angles of the left rear wheel and the right rear wheel that are in any proportion may be implemented.

Specifically, the operating diameter of the left rear transmission wheel may be variable, or the operating diameter of the right rear transmission wheel may be variable, or the operating diameters of both the left rear transmission wheel and the right rear transmission wheel may be variable.

In a possible implementation, the rear wheel steering transmission assembly further includes an adjusting transmission wheel configured to adjust tension of the second transmission belt. The left rear transmission wheel, the right rear transmission wheel, and the adjusting transmission wheel are in transmission connection by using the second transmission belt.

In the solution shown in this embodiment of this application, in a process in which the operating diameter of the left rear transmission wheel and/or the right rear transmission wheel changes, the tension of the second transmission belt changes, that is, a degree of tightness of the second transmission belt changes. Therefore, to keep the tension of the second transmission belt within an appropriate range, the adjusting transmission wheel may be further disposed in the rear wheel steering transmission assembly, to adjust the tension of the second transmission belt.

In a possible implementation, an operating diameter of the adjusting transmission wheel is variable.

In the solution shown in this embodiment of this application, the adjusting transmission wheel may be a transmission wheel with a variable operating diameter. In this way, when controlling a change of the operating diameter of the left rear transmission wheel and/or the right rear transmission wheel to adjust the transmission ratio, the controller can adaptively control a change of the operating diameter of the adjusting transmission wheel, so that the tension of the second transmission belt is kept within the appropriate range.

In a possible implementation, the upper steering system includes an upper steering drive motor.

In a possible implementation, each transmission wheel includes a first tapered disk, a second tapered disk, a transmission shaft, and a tapered disk drive apparatus. The first tapered disk and the second tapered disk are sleeved on the transmission shaft, and tapered surfaces of the first tapered disk and the second tapered disk are opposite to each other. The tapered disk drive apparatus is configured to control a distance between the first tapered disk and the second tapered disk, to change an operating diameter of the transmission wheel.

The transmission wheel is the intermediate transmission wheel, the left front transmission wheel, the right front transmission wheel, the left rear transmission wheel, the right rear transmission wheel, or the adjusting transmission wheel.

The tapered disk drive apparatus may be a hydraulic drive apparatus. The tapered disk drive apparatus may be electrically connected to a controller on the vehicle, so that the controller controls a change of the operating diameter of the transmission wheel by using the tapered disk drive apparatus.

In the solution shown in this embodiment of this application, the first tapered disk and the second tapered disk are sleeved on the transmission shaft, and tapered surfaces are opposite to each other. The transmission belt is disposed between the two tapered surfaces. When the two tapered surfaces are close to each other, the operating diameter of the transmission wheel becomes larger. When the two tapered surfaces are far apart, the operating diameter of the transmission wheel becomes smaller. Therefore, a change of a distance between the first tapered disk and the second tapered disk may be controlled, to implement the change of the operating diameter of the transmission wheel.

In a possible implementation, the vehicle steering apparatus further includes a controller. The controller is configured to: when the left front wheel steering subsystem and the right front wheel steering subsystem are in a power-effective state, control the intermediate clutch, the left front clutch, and the right front clutch to be in a disengaged state. The controller is further configured to control the left front wheel steering subsystem and the right front wheel steering subsystem to respectively perform steering actions of corresponding wheels.

The controller may be electrically connected to the left front wheel steering subsystem, the right front wheel steering subsystem, the intermediate clutch, the left front clutch, and the right front clutch, so that the controller controls each component. Specifically, the controller may be connected to lower steering drive motors in the left front wheel steering subsystem and the right front wheel steering subsystem.

In the solution shown in this embodiment of this application, when both the left front wheel steering subsystem and the right front wheel steering subsystem are in a power-effective state, all the intermediate clutch, the left front clutch, and the right front clutch may be controlled to be in a disengaged state, so that the left front wheel steering subsystem and the right front wheel steering subsystem are mechanically decoupled from the upper steering system. In this case, the left front wheel steering subsystem and the right front wheel steering subsystem may respectively perform steering actions of corresponding wheels, to avoid mutual interference between the upper steering system, left front wheel steering subsystem, and right front wheel steering subsystem.

A vehicle on which the vehicle steering apparatus provided in this embodiment of this application is installed may include an automatic driving mode and a manual driving mode. In the automatic driving mode, the upper steering system may be controlled to be in an idle state and a steering wheel may remain stationary, so that automatic driving experience of a driver is improved.

In the manual driving mode, because the upper steering system is mechanically decoupled from the lower steering system, the driver cannot sense a road surface condition when operating the steering wheel. Therefore, steering resistance may be applied to the steering wheel by using the upper steering system to simulate real road sensing. Because the driver's road sense is generated through simulation, information that can best reflect an actual driving state of the vehicle and a road surface condition may be extracted and used as a control variable of a torque at which the steering wheel returns to a center position, so that the steering wheel only provides useful information for the driver, thereby providing more real road sensing for the driver.

In a possible implementation, the controller is further configured to: when only one of the left front wheel steering subsystem and the right front wheel steering subsystem is in a power failure state, control the intermediate clutch to be in a disengaged state, and control the left front clutch and the right front clutch to be in an engaged state. The controller is further configured to control a power-effective steering subsystem to perform a steering action of a corresponding wheel, and transfer power to a power-ineffective steering subsystem by using the front wheel steering transmission assembly, so that the power-ineffective steering subsystem performs the steering action of the corresponding wheel.

In the solution shown in this embodiment of this application, when only one of the left front wheel steering subsystem and the right front wheel steering subsystem is in a power-effective state, the intermediate clutch may be controlled to be in a disengaged state, and the left front clutch and the right front clutch may be controlled to be in a disengaged state, so that power transfer can be completed between the left front wheel steering subsystem and the right front wheel steering subsystem.

In the automatic driving mode, the upper steering system may be controlled to be in an idle state and the steering wheel remains stationary, so that automatic driving experience of the driver is improved.

In the manual driving mode, because the upper steering system is mechanically decoupled from the lower steering system, the driver cannot sense the road surface condition when operating the steering wheel. Therefore, steering resistance may be applied to the steering wheel by using the upper steering system to simulate real road sensing. Because the driver's road sense is generated through simulation, the information that can best reflect the actual driving state of the vehicle and the road surface condition may be extracted and used as the control variable of the torque at which the steering wheel returns to the center position, so that the steering wheel only provides useful information for the driver, thereby providing more real road sensing for the driver.

In a possible implementation, the controller is further configured to: when both the left front wheel steering subsystem and the right front wheel steering subsystem are in a power failure state, and the upper steering drive motor in the upper steering system is in a power-effective state, control all the intermediate clutch, the left front clutch, and the right front clutch to be in an engaged state. The controller is further configured to control the upper steering drive motor in the upper steering system to transfer power to the left front wheel steering subsystem and the right front wheel steering subsystem by using the front wheel steering transmission assembly, to perform the steering actions of the left front wheel and the right front wheel.

In the solution shown in this embodiment of this application, when both the left front wheel steering subsystem and the right front wheel steering subsystem are in a power failure state, and the upper steering drive motor in the upper steering system is in a power-effective state, the intermediate clutch, the controller may control the left front clutch, and the right front clutch to be in an engaged state, to complete a mechanical connection between the upper steering system and the lower steering system.

It should be noted that in the manual driving mode in which the upper steering system and the lower steering system are mechanically connected, steering power of the lower steering system is provided by the upper steering system. Therefore, in this case, the upper steering drive motor provides steering driving force instead of steering resistance provided when the road sensing is simulated.

In a possible implementation, the controller is further configured to: when both the left front wheel steering subsystem and the right front wheel steering subsystem are in a power failure state, and the upper steering drive motor in the upper steering system is in a power failure state, control all the intermediate clutch, the left front clutch, and the right front clutch to be in an engaged state.

In the solution shown in this embodiment of this application, when both the left front wheel steering subsystem and the right front wheel steering subsystem are in a power failure state, and the upper steering drive motor in the upper steering system is in a power failure state, the controller may control the intermediate clutch, the left front clutch, and the right front clutch to be in an engaged state, to complete a mechanical connection between the upper steering system and the lower steering system.

A vehicle on which the vehicle steering apparatus provided in this embodiment of this application is installed may include two driving modes: an automatic driving mode and a manual driving mode. However, when both the upper steering system and the lower steering system are in a power failure state, the vehicle cannot enter the automatic driving mode. In the manual driving mode, the driver manually rotates the steering wheel to generate steering power. Then, the steering power is transferred to the left front wheel steering subsystem and the right front wheel steering subsystem by using the front wheel steering transmission assembly, to perform the steering actions of the left front wheel and the right front wheel.

In a possible implementation, the controller is further configured to control changes of the operating diameters of the left front transmission wheel and the right front transmission wheel, to change a transmission ratio of the left front transmission wheel to the right front transmission wheel, so that different steering angles of the left front wheel and the right front wheel are implemented.

In the solution shown in this embodiment of this application, the changes of the operating diameters of the left front transmission wheel and the right front transmission wheel may be correspondingly adjusted, to change a transmission ratio of the left front transmission wheel to the right front transmission wheel, so that different steering angles of the left front wheel and the right front wheel may be implemented.

In a possible implementation, the controller is further configured to: when controlling the changes of the operating diameters of the left front transmission wheel and the right front transmission wheel, control the change of the operating diameter of the intermediate transmission wheel, to adjust the tension of the first transmission belt.

In the solution shown in this embodiment of this application, in a process in which the operating diameters of the left front transmission wheel and the right front transmission wheel change, the tension of the first transmission belt changes, that is, the degree of tightness of the first transmission belt changes. This affects power transfer between the left front transmission wheel and the right front transmission wheel. Therefore, when controlling the changes of the operating diameters of the left front transmission wheel and the right front transmission wheel, the controller may further control the change of the operating diameter of the intermediate transmission wheel, to adjust the tension of the first transmission belt.

In a possible implementation, the vehicle steering apparatus further includes a controller. The controller is configured to: when both the left rear wheel steering subsystem and the right rear wheel steering subsystem are in a power-effective state, control the left rear clutch and the right rear clutch to be in a disengaged state. The controller is further configured to control the left rear wheel steering subsystem and the right rear wheel steering subsystem to respectively perform steering actions of corresponding wheels.

The controller may be electrically connected to the left rear wheel steering subsystem, the right rear wheel steering subsystem, the left rear clutch, and the right rear clutch, so that the controller controls each component. Specifically, the controller may be separately connected to lower steering drive motors in the left rear wheel steering subsystem and the right rear wheel steering subsystem.

In the solution shown in this embodiment of this application, when both the left rear wheel steering subsystem and the right rear wheel steering subsystem are in a power-effective state, both the left rear clutch and the right rear clutch may be controlled to be in a disengaged state, so that the left rear wheel steering subsystem is mechanically decoupled from the right rear wheel steering subsystem. In this case, the left rear wheel steering subsystem and the right rear wheel steering subsystem can respectively perform steering actions of corresponding wheels, to avoid mutual interference between the left rear wheel steering subsystem and the right rear wheel steering subsystem.

In a possible implementation, the controller is further configured to: when only one of the left rear wheel steering subsystem and the right rear wheel steering subsystem is in a power failure state, control the left rear clutch and the right rear clutch to be in an engaged state. The controller is further configured to control a power-effective steering subsystem to perform a steering action of a corresponding wheel, and transfer power to a power-ineffective steering subsystem by using the rear wheel steering transmission assembly, so that the power-ineffective steering subsystem performs the steering action of the corresponding wheel.

In the solution shown in this embodiment of this application, when only one of the left rear wheel steering subsystem and the right rear wheel steering subsystem is in a power-effective state, the left rear clutch and the right rear clutch may be controlled to be in an engaged state, so that power transfer can be completed between the left rear wheel steering subsystem and the right rear wheel steering subsystem.

In a possible implementation, the controller is further configured to control changes of the operating diameters of the left rear transmission wheel and the right rear transmission wheel, to change a transmission ratio of the left rear transmission wheel to the right rear transmission wheel, so that different steering angles of the left rear wheel and the right rear wheel are implemented.

The controller may further be electrically connected to the left rear transmission wheel and the right rear transmission wheel, to control the operating diameters of the left rear transmission wheel and the right rear transmission wheel.

In the solution shown in this embodiment of this application, changes of the operating diameters of the left rear transmission wheel and the right rear transmission wheel may be correspondingly adjusted, to change the transmission ratio of the left rear transmission wheel to the right rear transmission wheel, so that different steering angles of the left rear wheel and the right rear wheel may be implemented.

In a possible implementation, the controller is further configured to: when controlling the changes of the operating diameters of the left rear transmission wheel and the right rear transmission wheel, control a change of the operating diameter of the adjusting transmission wheel, to adjust the tension of the second transmission belt.

In the solution shown in this embodiment of this application, in a process in which the operating diameters of the left rear transmission wheel and the right rear transmission wheel change, the tension of the second transmission belt changes, that is, the degree of tightness of the second transmission belt changes. This affects power transfer between the left rear transmission wheel and the right rear transmission wheel. Therefore, when controlling the changes of the operating diameters of the left rear transmission wheel and the right rear transmission wheel, the controller may further control the change of the operating diameter of the adjusting transmission wheel, to adjust the tension of the second transmission belt.

In a possible implementation, the controller is further configured to: when both the left rear wheel steering subsystem and the right rear wheel steering subsystem are in a power failure state, control the left rear clutch and the right rear clutch to be in a disengaged state.

In the solution shown in this embodiment of this application, if both the left rear wheel steering subsystem and the right rear wheel steering subsystem are in a power failure state, because the left rear wheel steering subsystem and the right rear wheel steering subsystem are mechanically decoupled from the upper steering system, the left rear wheel steering subsystem and the right rear wheel steering subsystem do not have a function of controlling wheel steering in the power failure state. The four-wheel steering apparatus changes into a two-wheel steering apparatus, and the left rear wheel and the right rear wheel follow steering. In this case, the controller may control the left rear clutch and the right rear clutch to be in a disengaged state, to avoid mutual interference between the left rear wheel and the right rear wheel during following steering.

According to a second aspect, a vehicle is provided. The vehicle includes the vehicle steering apparatus according to any one of the first aspect.

Advantageous effects brought by the technical solutions provided in embodiments of this application are as follows:

An embodiment of this application provides a vehicle steering apparatus. An upper steering system of the vehicle steering apparatus is connected to an intermediate transmission wheel in a front wheel steering transmission assembly by using an intermediate clutch. A left front wheel steering subsystem is connected to a left front transmission wheel by using a left front clutch. A right front wheel steering subsystem is connected to a right front transmission wheel by using a right front clutch. In this way, when both the left front wheel steering subsystem and the right front wheel steering subsystem are in a power failure state, all the intermediate clutch, the left front clutch, and the right front clutch may be controlled to be in an engaged state, so that the upper steering system is mechanically connected to a lower steering system. A driver may operate the upper steering system to provide steering power for the lower steering system. Therefore, when power of the lower steering system is ineffective, a vehicle does not lose a steering function.

### BRIEF DESCRIPTION OF DRAWINGS

FIG. 1 is a schematic diagram of a vehicle steering apparatus according to an embodiment of this application;
FIG. 2 is a schematic diagram of a front wheel steering transmission assembly according to an embodiment of the invention;
FIG. 3 is a schematic diagram of a structure of an upper steering system according to an embodiment of this application;
FIG. 4 is a schematic diagram of a structure of a lower steering subsystem according to an embodiment of this application;
FIG. 5 is a schematic diagram of an Ackermann angle according to an embodiment of this application;
FIG. 6 is a schematic diagram of a vehicle steering apparatus according to an embodiment of this application;
FIG. 7 is a schematic diagram of a rear wheel steering transmission assembly according to an embodiment of this application;
FIG. 8 is a schematic diagram of a structure of a transmission wheel with a variable operating diameter according to an embodiment of this application;
FIG. 9 is a schematic diagram of a vehicle steering apparatus in a normal operating mode according to an embodiment of this application;
FIG. 10 is a schematic diagram of a vehicle steering apparatus in a lower single-side assist mode according to an embodiment of this application;
FIG. 11 is a schematic diagram of a vehicle steering apparatus is in an upper assist mode according to an embodiment of this application;
FIG. 12 is a schematic diagram of a vehicle steering apparatus in a mechanical steering mode according to an embodiment of this application;
FIG. 13 is a mode selection flowchart of a vehicle steering apparatus according to an embodiment of this application;
FIG. 14 is a schematic diagram of a wheel state according to an embodiment of this application;
FIG. 15 is a schematic diagram of a wheel state according to an embodiment of this application;
FIG. 16 is a schematic diagram of a wheel state according to an embodiment of this application;
FIG. 17 is a schematic diagram of a wheel state according to an embodiment of this application;
FIG. 18 is a schematic diagram of a structure of a transmission wheel with a variable operating diameter according to an embodiment of this application;
FIG. 19 is a schematic diagram of a structure of a transmission wheel with a variable operating diameter according to an embodiment of this application; and
FIG. 20 is a schematic diagram of a structure of a transmission wheel with a variable operating diameter according to an embodiment of this application.

### Reference numerals

1-upper steering system, 11-upper steering drive motor, 12-steering wheel, 13-column, 14-countershaft;
2-lower steering system, 21-left front wheel steering subsystem, 22-right front wheel steering subsystem, 23-left rear steering subsystem, 24-right rear steering subsystem, 201-lower steering drive motor, 202-gear shaft, 203-drive rack;
3-front wheel steering transmission assembly, 31-intermediate transmission wheel, 32-left front transmission wheel, 33-right front transmission wheel, 34-first transmission belt, 301-first tapered disk, 302-second tapered disk, 303-transmission shaft, 304-tapered disk drive apparatus, 305-first circular arc part, 306-hub, 307-drive rod, 308-second circular arc part, 309-stay bar, 310-drive apparatus;
4-intermediate clutch;
5-left front clutch;
6-right front clutch;
7-rear wheel steering transmission assembly, 71-left rear transmission wheel, 72-right rear transmission wheel, 73-second transmission belt, 74-adjusting transmission wheel;
8-left rear clutch; and
9- right rear clutch.

### DESCRIPTION OF EMBODIMENTS

Embodiments of this application provide a vehicle steering apparatus and a vehicle on which the vehicle steering apparatus is installed. The vehicle steering apparatus includes an upper steering system, a lower steering system, transmission assemblies, and clutches. The upper steering system and the lower steering system are respectively connected to the transmission assemblies by using clutches. In this way, when power of the lower steering system is effective, the clutches may be in a disengaged state, and the upper steering system is mechanically decoupled from the lower steering system, so that a steering wheel in the upper steering system is idle in an automatic driving state, to improve driving experience. When power of the lower steering system is ineffective, the clutches between the upper steering system and the transmission assemblies and the clutches between the lower steering system and the transmission assemblies are all in an engaged state, and the upper steering system and the lower steering system are mechanically connected by using the transmission assemblies, so that a driver can operate the upper steering system to provide power for the lower steering system, to implement steering of the vehicle.

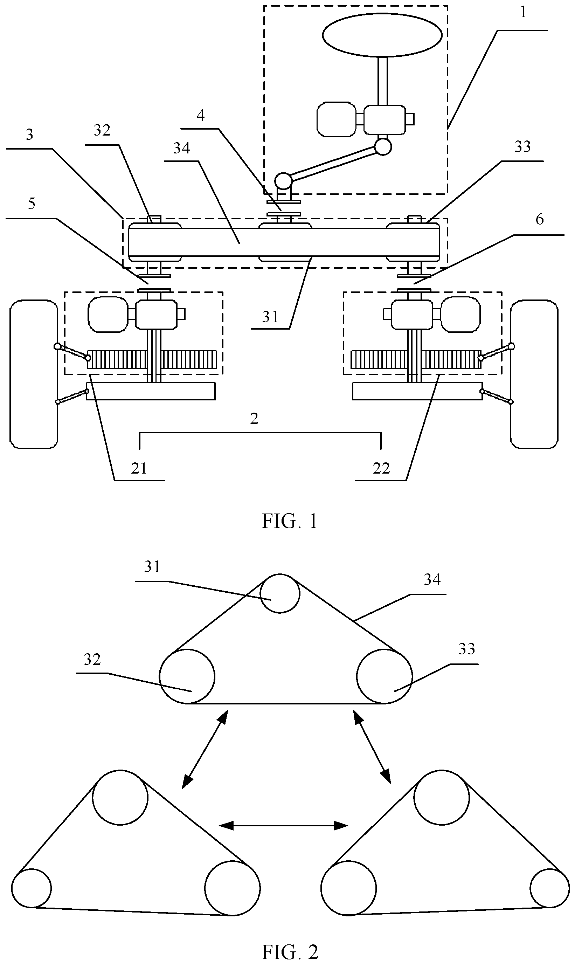

An embodiment of this application provides a vehicle steering apparatus. As shown in FIG. 1, the vehicle steering apparatus includes an upper steering system 1, a lower steering system 2, a front wheel steering transmission assembly 3, an intermediate clutch 4, a left front clutch 5, and a right front clutch 6.

The front wheel steering transmission assembly 3 includes an intermediate transmission wheel 31, a left front transmission wheel 32, a right front transmission wheel 33, and a first transmission belt 34. The intermediate transmission wheel 31, the left front transmission wheel 32, and the right front transmission wheel 33 are in transmission connection by using the first transmission belt 34. The lower steering system 2 includes a left front wheel steering subsystem 21 and a right front wheel steering subsystem 22.

The upper steering system 1 is connected to the intermediate transmission wheel 31 by using an intermediate clutch 4. The left front wheel steering subsystem 21 is connected to the left front transmission wheel 32 by using a left front clutch 5. The right front wheel steering subsystem 22 is connected to the right front transmission wheel 33 by using a right front clutch 6.

The upper steering system 1 is a control system for vehicle steering, and may also provide steering power in some scenarios.

The lower steering system 2 is an execution system for vehicle steering. The lower steering system 2 may include the left front wheel steering subsystem 21 and the right front wheel steering subsystem 22 that are respectively configured to perform steering actions of a left front wheel and a right front wheel. When the vehicle steering apparatus is a four-wheel steering apparatus, the lower steering system 2 may further include a left rear wheel steering subsystem 23 and a right rear wheel steering subsystem 24 that are respectively configured to perform steering actions of a left rear wheel and a right rear wheel.

The front wheel steering transmission assembly 3 includes the intermediate transmission wheel 31, the left front transmission wheel 32, the right front transmission wheel 33, and the first transmission belt 34. As shown in FIG. 2, the intermediate transmission wheel 31, the left front transmission wheel 32, and the right front transmission wheel 33 are in transmission connection by using the first transmission belt 34. The front wheel steering transmission assembly 3 is configured to transfer power between the upper steering system 1, the left front wheel steering subsystem 21, and the right front wheel steering subsystem 22. Specifically, when both the left front clutch 5 and the right front clutch 6 are in an engaged state, power may be transferred between the left front wheel steering subsystem 21 and the right front wheel steering subsystem 22 by using the front wheel steering transmission assembly 3. When all the intermediate clutch 4, the left front clutch 5, and the right front clutch 6 are in an engaged state, power may be transferred between the upper steering system 1 and the lower steering system 2. When all the intermediate clutch 4, the left front clutch 5, and the right front clutch 6 are in a disengaged state, the upper steering system 1 is mechanically decoupled from the front wheel steering transmission assembly 3, and the lower steering system 2 is mechanically decoupled from the front wheel steering transmission assembly 3, so that the upper steering system 1 is mechanically decoupled from the lower steering system 2.

The intermediate clutch 4, the left front clutch 5, and the right front clutch 6 generally refer to all connecting apparatuses that can be engaged and disengaged, but not only refer to conventional clutches.

The vehicle steering apparatus may further include a controller for controlling vehicle steering. The controller may be electrically connected to the upper steering system 1, the left front wheel steering subsystem 21, the right front wheel steering subsystem 22, the intermediate clutch 4, the left front clutch 5, and the right front clutch 6 to control these components.

In the solution shown in this embodiment of this application, this embodiment of this application provides the vehicle steering apparatus. In the vehicle steering apparatus, the upper steering system 1 is connected to the intermediate transmission wheel 31 in the front wheel steering transmission assembly 3 by using the intermediate clutch 4, the left front wheel steering subsystem 21 is connected to the left front transmission wheel 32 by using the left front clutch 5, and the right front wheel steering subsystem 22 is connected to the right front transmission wheel 33 by using the right front clutch 6. In this way, when both the left front wheel steering subsystem 21 and the right front wheel steering subsystem 22 are in a power failure state, all the intermediate clutch 4, the left front clutch 5, and the right front clutch 6 may be controlled to be in an engaged state, so that the upper steering system 1 is mechanically connected to the lower steering system 2. A driver may operate the upper steering system 1 to provide steering power for the lower steering system 2. Therefore, when power of the lower steering system 2 is ineffective, a vehicle does not lose a steering function.

In addition, when one of the left front wheel steering subsystem 21 and the right front wheel steering subsystem 22 is damaged, both the left front clutch 5 and the right front clutch 6 may be in an engaged state. In this way, steering power of a power-effective steering subsystem can be transferred to a power-ineffective steering subsystem by using the front wheel steering transmission assembly 3.

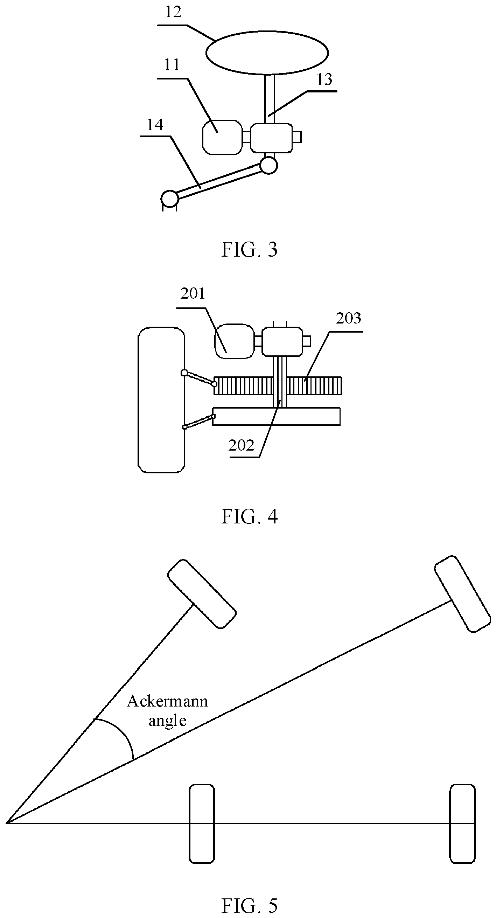

In addition, when both the left front wheel steering subsystem 21 and the right front wheel steering subsystem 22 are in a power-effective state, all the intermediate clutch 4, the left front clutch 5, and the right front clutch 6 may be in a disengaged state. In this way, the left front wheel steering subsystem 21 and the right front wheel steering subsystem 22 may independently control steering of corresponding wheels, to avoid mutual interference. In addition, the vehicle steering apparatus is also enabled to implement different Ackermann angles, so that the vehicle turns more stably. Different Ackermann angles may be used in different scenarios (that is, steering angles of two wheels are different). The Ackermann angle is designed to prevent the vehicle from side skidding when the vehicle turns. When the vehicle steering apparatus is designed, a turning angle of an inner wheel (relative to an apex) is slightly greater than that of an outer wheel, so that the two wheels have different angles and form an included angle, namely, the Ackermann angle, as shown in FIG. 5. Such a design allows a vehicle body more stable when the vehicle turns quickly.

In a possible implementation, a specific implementation of the upper steering system 1 is provided.

As shown in FIG. 3, the upper steering system 1 includes an upper steering drive motor 11, a steering wheel 12, a column 13, and a countershaft 14.

The upper steering drive motor 11 is a power source of the upper steering system 1. The upper steering drive motor 11 may be electrically connected to the controller, so that the controller controls the upper steering drive motor 11. The upper steering drive motor 11 is disposed, so that when power of the lower steering system 2 is in a failure state, the upper steering drive motor 11 may be configured to provide steering power. Therefore, a driver performs an operation more effort-saving, and a case in which the steering power is completely provided by a human person is avoided.

In addition, when the upper steering system 1 is mechanically decoupled from the lower steering system 2, the upper steering drive motor 11 may further provide steering resistance for the steering wheel 12, to simulate road sensing and improve driving experience of the driver.

In the solution shown in this embodiment of this application, the driver operates the steering wheel 12 to rotate, and the rotation of the steering wheel 12 is transferred to the column 13, and then transferred to the countershaft 14 by using the column 13. If the intermediate clutch 4, the left front clutch 5, and the right front clutch 6 are in an engaged state, the rotation is further transferred to the lower steering system 2 by using the front wheel steering drive assembly 3. In this case, the upper steering drive motor 11 provides assistance, to make the driver's operation more labor-saving.

In addition, to enable the upper steering system 1 and the lower steering system 2 to be in a mechanically decoupled state and still implement a manual driving mode, a sensor may be disposed in the upper steering system 1. The sensor is configured to detect a rotation angle of the steering wheel 12. The sensor is electrically connected to the controller, so that the controller can receive a steering angle signal of the sensor, determine a steering angle of a wheel based on the steering angle signal, and send a corresponding steering angle signal to a corresponding lower steering subsystem.

In a possible implementation, a specific implementation of a lower steering subsystem is provided. The lower steering subsystem may be the left front wheel steering subsystem 21, the right front wheel steering subsystem 22, the left rear wheel steering subsystem 23, or the right rear wheel steering subsystem 24.

As shown in FIG. 4, the lower steering subsystem includes a lower steering drive motor 201, a gear shaft 202, and a drive rack 203.

The lower steering drive motor 201 is a power source of the lower steering subsystem. The lower steering drive motor 201 may be electrically connected to the controller, so that the controller may control the lower steering subsystem. Specifically, the lower steering drive motor 201 may receive the steering angle signal sent by the controller, and control, based on the steering angle signal, the wheel to rotate at a corresponding angle. When power of the lower steering drive motor 201 is ineffective, power of the lower steering subsystem is ineffective.

In the solution shown in this embodiment of this application, the lower steering drive motor 201 drives the gear shaft 202 to rotate, and the gear shaft 202 is engaged with the drive rack 203. In this case, the gear shaft 202 may drive the drive rack 203 to perform linear motion, and the drive gear 203 is connected to a wheel, so that the wheel can be driven to rotate.

When the lower steering subsystem is ineffective, power from another lower steering subsystem or the upper steering system 1 is transferred to the gear shaft 202 of a lower rotor system by using the front wheel steering transmission assembly 3 or the rear wheel steering transmission assembly 7. In this case, the gear shaft 202 can still drive the drive rack 203 to perform linear motion.

In a possible implementation, an operating diameter of at least one of the left front transmission wheel 32 and the right front transmission wheel 33 is variable.

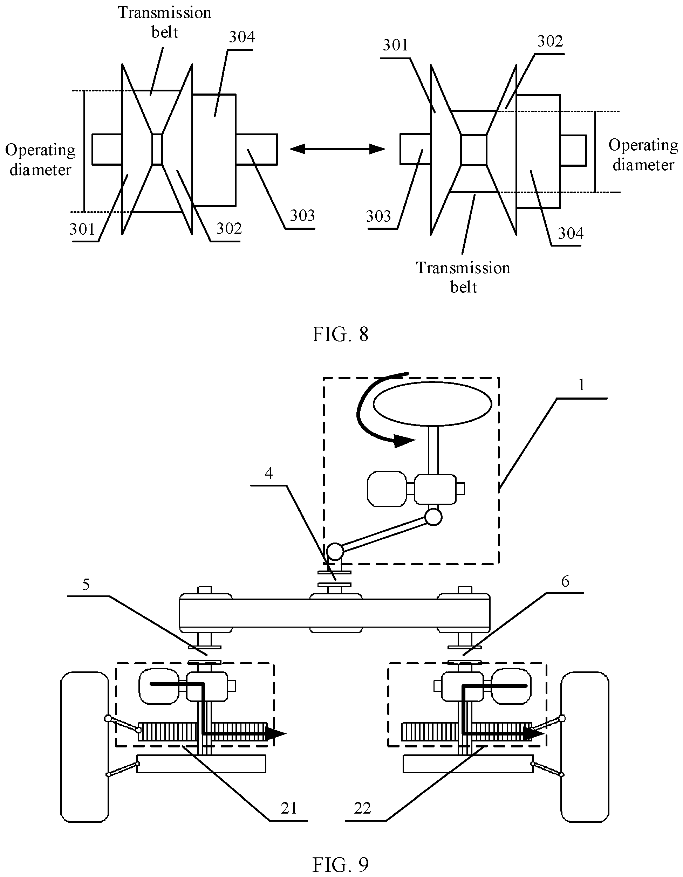

The operating diameter may also be referred to as a meshing diameter, a mating diameter, or the like of a transmission wheel and a transmission belt, as shown in FIG. 8 and FIG. 2.

The controller may be connected to the left front transmission wheel 32 and the right front transmission wheel 33, to control the operating diameters of the left front transmission wheel 32 and the right front transmission wheel 33.

In the solution shown in this embodiment of this application, the operating diameter of the left front transmission wheel 32 and/or the right front transmission wheel 33 may be adjusted, to change a transmission ratio of the left front transmission wheel 32 to the right front transmission wheel 33, as shown in FIG. 2. In this way, steering angles of the left front wheel and the right front wheel that are in any proportion may be implemented, so that a function of a variable Ackermann angle is implemented.

Specifically, the operating diameter of the left front transmission wheel 32 may be variable. In this case, the operating diameter of the left front transmission wheel 32 may be changed, to change the transmission ratio of the left front transmission wheel 32 to the right front transmission wheel 33. Alternatively, the operating diameter of the right front transmission wheel 33 may be variable. In this case, the operating diameter of the right front transmission wheel 33 may be changed, to change the transmission ratio of the left front transmission wheel 32 to the right front transmission wheel 33. Alternatively, the operating diameters of both the left front transmission wheel 32 and the right front transmission wheel 33 may be variable. In this case, the operating diameters of the left front transmission wheel 32 and the right front transmission wheel 33 may be correspondingly adjusted, to change the transmission ratio of the left front transmission wheel 32 to the right front transmission wheel 33. For the last case, a range of achievable transmission ratios is relatively large.

In a possible implementation, as shown in FIG. 2, an operating diameter of the intermediate transmission wheel 31 is variable.

In the solution shown in this embodiment of this application, in a process in which the operating diameter of the left front transmission wheel 32 and/or the right front transmission wheel 33 changes, tension of the first transmission belt 34 changes, that is, a degree of tightness of the first transmission belt 34 changes. Therefore, to keep the tension of the first transmission belt 34 within an appropriate range, the intermediate transmission wheel 31 may also be a transmission wheel with a variable operating diameter. In this way, when controlling a change of the operating diameter of the left front transmission wheel 32 and/or the right front transmission wheel 33 to adjust the transmission ratio, the controller may adaptively control a change of the operating diameter of the intermediate transmission wheel 31, so that the tension of the first transmission belt 34 is kept within the appropriate range.

Alternatively, in another possible implementation, the operating diameter of the intermediate transmission wheel 31 is fixed. The front wheel steering transmission assembly 3 further includes a tension wheel, and the tension wheel may be a spring tension wheel or the like.

It should be noted that the vehicle steering apparatus provided in this embodiment of this application may be a two-wheel steering apparatus, or may be a four-wheel steering apparatus. When the vehicle steering apparatus provided in this embodiment of this application is a four-wheel steering apparatus, a technical solution of the vehicle steering apparatus may be described as follows:

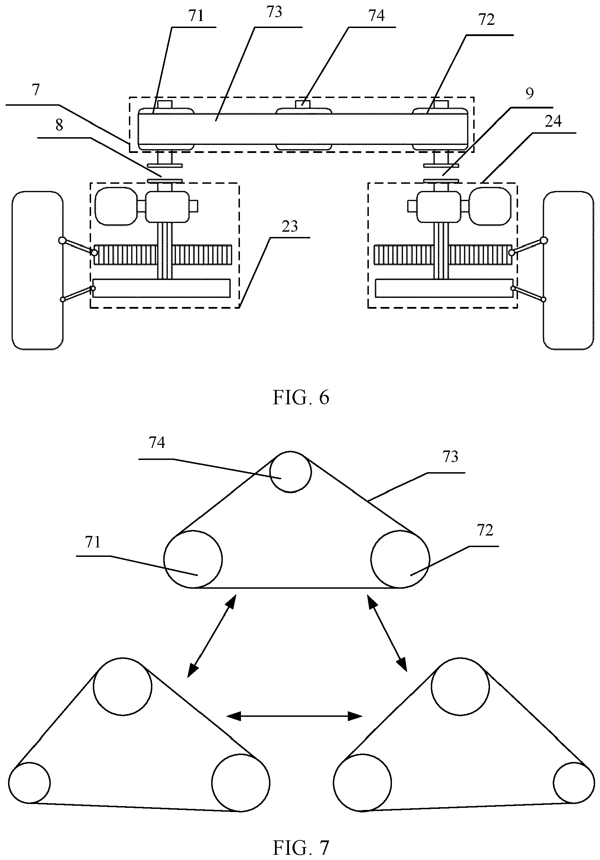

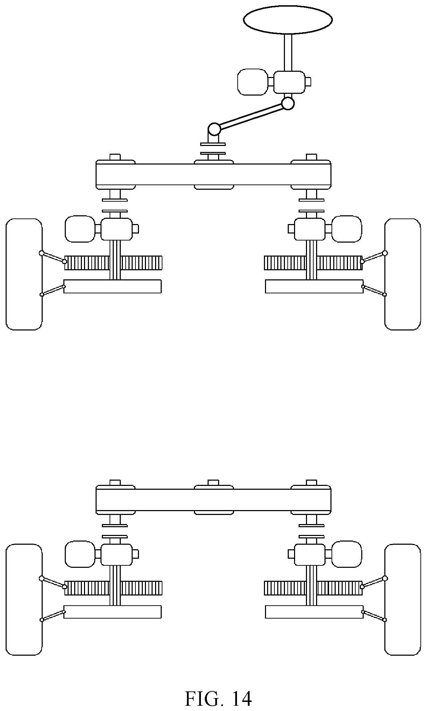

In a possible implementation, as shown in FIG. 6 and FIG. 14, the lower steering system 2 further includes the left rear wheel steering subsystem 23 and the right rear wheel steering subsystem 24. The vehicle steering apparatus further includes the rear wheel steering transmission assembly 7, the left rear clutch 8, and the right rear clutch 9. The rear wheel steering transmission assembly 7 includes a left rear transmission wheel 71, a right rear transmission wheel 72, and a second transmission belt 73. The left rear transmission wheel 71 and the right rear transmission wheel 72 are in transmission connection by using the second transmission belt 73.

The left rear wheel steering subsystem 23 is connected to the left rear transmission wheel 71 by using the left rear clutch 8, and the right rear wheel steering subsystem 24 is connected to the right rear transmission wheel 72 by using the right rear clutch 9.

In the solution shown in this embodiment of this application, compared with a dual-wheel steering drive apparatus, a four-wheel vehicle steering apparatus controls steering angles of four wheels more precisely.

When both the left rear wheel steering subsystem 23 and the right rear wheel steering subsystem 24 are in a power-effective state, the left rear clutch 8 and the right rear clutch 9 may be controlled to be in a disengaged state, so that the left rear wheel steering subsystem 23 and the right rear wheel steering subsystem 24 independently control steering of corresponding wheels. When only one of the left rear wheel steering subsystem 23 and the right rear wheel steering subsystem 24 is in a power-effective state, the left rear clutch 8 and the right rear clutch 9 may be controlled to be engaged, so that steering power of a power-effective steering subsystem is transferred to a power-ineffective steering subsystem by using the rear wheel steering transmission assembly 7.

However, when power of both the left rear wheel steering subsystem 23 and the right rear wheel steering subsystem 24 is ineffective, the left rear wheel steering subsystem 23 and the right rear wheel steering subsystem 24 cannot be mechanically connected to the upper steering system 1. Therefore, the left rear wheel and the right rear wheel only follow steering.

In a possible implementation, an operating diameter of at least one of the left rear transmission wheel 71 and the right rear transmission wheel 72 is variable.

The controller may be connected to the left rear transmission wheel 71 and the right rear transmission wheel 72, to control the operating diameters of the left rear transmission wheel 71 and the right rear transmission wheel 72.

In the solution shown in this embodiment of this application, the operating diameter of the left rear transmission wheel 71 and/or the right rear transmission wheel 72 may be changed, to change a transmission ratio of the left rear transmission wheel 71 to the right rear transmission wheel 72, as shown in FIG. 7. In this way, steering angles of the left rear wheel and the right rear wheel that are in any proportion may be implemented.

Specifically, the operating diameter of the left rear transmission wheel 71 may be variable. In this case, the operating diameter of the left rear transmission wheel 71 may be changed, to change the transmission ratio of the left rear transmission wheel 71 to the right rear transmission wheel 72. Alternatively, the operating diameter of the right rear transmission wheel 72 may be variable. In this case, the operating diameter of the right rear transmission wheel 72 may be changed, to change the transmission ratio of the left rear transmission wheel 71 to the right rear transmission wheel 72.

Alternatively, the operating diameters of both the left rear transmission wheel 71 and the right rear transmission wheel 72 may be variable. In this case, the operating diameters of the left rear transmission wheel 71 and the right rear transmission wheel 72 may be correspondingly adjusted, to change the transmission ratio of the left rear transmission wheel 71 to the right rear transmission wheel 72. For the last case, a range of achievable transmission ratios is relatively large.

In a possible implementation, as shown in FIG. 7, the rear wheel steering transmission assembly 7 further includes an adjusting transmission wheel 74 configured to adjust tension of the second transmission belt 73. The left rear transmission wheel 71, the right rear transmission wheel 72, and the adjusting transmission wheel 74 are in transmission connection by using the second transmission belt 73.

In the solution shown in this embodiment of this application, similar to the front wheel steering transmission assembly 3, in a process in which the operating diameter of the left rear transmission wheel 71 and/or the right rear transmission wheel 72 change, the tension of the second transmission belt 73 changes, that is, a degree of tightness of the second transmission belt 73 changes. Therefore, to keep the tension of the second transmission belt 73 within an appropriate range, the adjusting transmission wheel 74 may be further disposed in the rear wheel steering transmission assembly 7, and is configured to adjust the tension of the second transmission belt 73.

In a possible implementation, the adjusting transmission wheel 74 is a tension wheel, for example, may be a spring tension wheel.

In another possible implementation, an operating diameter of the adjusting transmission wheel 74 is variable, that is, the adjusting transmission wheel 74 is the same as the left rear transmission wheel 71 and the right rear transmission wheel 72, and the three wheels are all transmission wheels with variable operating diameters. In this implementation, as shown in FIG. 7, when controlling a change of the operating diameter of the left rear transmission wheel 71 and/or the right rear transmission wheel 72 to adjust the transmission ratio, the controller may adaptively control a change of the operating diameter of the adjusting transmission wheel 74, so that the tension of the second transmission belt 73 is kept within the appropriate range.

The transmission wheel with a variable operating diameter may be implemented in a plurality of forms. A specific implementation of the transmission wheel is not limited in this application. The following provides three specific implementations of the transmission wheel with a variable operating diameter.

In a possible implementation, as shown in FIG. 8, each transmission wheel includes a first tapered disk 301, a second tapered disk 302, a transmission shaft 303, and a tapered disk drive apparatus 304. The first tapered disk 301 and the second tapered disk 302 are sleeved on the transmission shaft 303, and tapered surfaces of the first tapered disk 301 and the second tapered disk 302 are opposite to each other.

The tapered disk drive apparatus 4 is configured to control a distance between the first tapered disk 301 and the second tapered disk 302, to change an operating diameter of the transmission wheel.

The transmission wheel may be the intermediate transmission wheel 31, the left front transmission wheel 32, the right front transmission wheel 33, the left rear transmission wheel 71, the right rear transmission wheel 72, or the adjusting transmission wheel 74.

The tapered disk drive apparatus 4 may be a hydraulic drive apparatus. The tapered disk drive apparatus 4 may be electrically connected to a controller on the vehicle, so that the controller controls a change of the operating diameter of the transmission wheel by using the tapered disk drive apparatus 4.

In the solution shown in this embodiment of this application, as shown in FIG. 8, the first tapered disk 301 and the second tapered disk 302 are sleeved on the transmission shaft 303, and tapered surfaces are opposite to each other. The transmission belt is disposed between the two tapered surfaces. When the two tapered surfaces are close to each other, the operating diameter of the transmission wheel becomes larger (for example, a transmission wheel on the left side in FIG. 8). When the two tapered surfaces are far apart, the operating diameter of the transmission wheel becomes smaller (for example, a transmission wheel on the right side in FIG. 8). Therefore, a change of a distance between the first tapered disk 301 and the second tapered disk 302 may be controlled, to implement the change of the operating diameter of the transmission wheel.

The tapered disk drive apparatus 304 may control movement of the second tapered disk 302 to change the distance between the two tapered disks. The first tapered disk 301 may be a fixed disk fixed to the transmission shaft 303, and the second tapered disk 302 is a movable disk. Certainly, both the first tapered disk 301 and the second tapered disk 302 may be movable disks. This is not limited in this application.

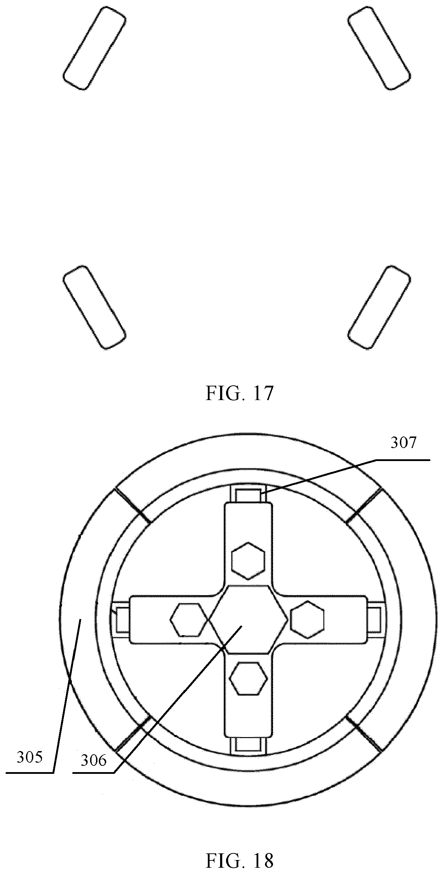

In another possible implementation, as shown in FIG. 18, the transmission wheel includes a plurality of first circular arc parts 305, a hub 306, and a plurality of drive rods 307. The plurality of first circular arc parts 305 form a body of the transmission wheel, one end of each drive rod 307 is connected to one first circular arc part 305, and the other end is disposed in the hub 306 and may be retracted in the hub 306. The hub 306 is mounted on a rotating shaft.

In the solution shown in this embodiment of this application, the drive rod 307 may be retracted in the hub 306 to drive the plurality of first circular arc parts 305 away from or close to each other, so that the operating diameter of the transmission wheel is variable. When the plurality of first circular arc parts 305 are away from each other, the operating diameter of the transmission wheel gradually increases; and when the plurality of first circular arc parts 305 are close to each other, the operating diameter of the transmission wheel gradually decreases. As shown in FIG. 18, the operating diameter of the transmission wheel is at its minimum.

The drive rod 307 may be hydraulically driven, or may be driven by using a motor. This is not limited in this application.

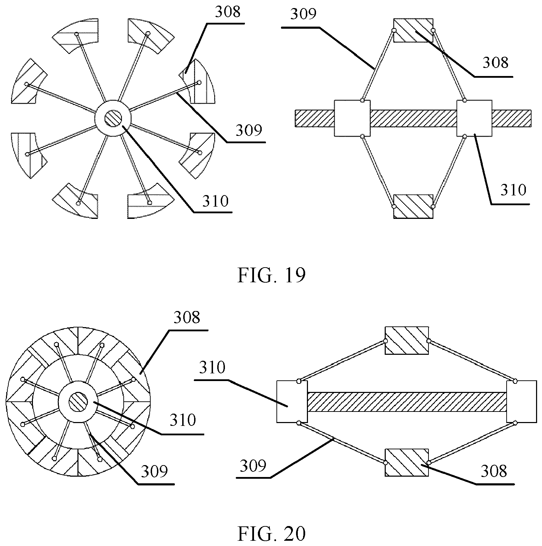

In another possible implementation, as shown in FIG. 19 and FIG. 20, the transmission wheel includes a plurality of second circular arc parts 308, a plurality of stay bars 309, and two drive apparatuses 310. The plurality of second circular arc parts 308 form a body of the transmission wheel, one end of each stay bar 309 is connected to one second circular arc part 308, and the other end is connected to the drive apparatus 310. The two drive apparatuses 310 are disposed on two sides of the second circular arc part 308.

In the solution shown in this embodiment of this application, the two drive apparatuses 310 are close to each other or kept apart, so that the plurality of stay bars 309 may be kept apart or retracted into the plurality of second circular arc parts 308. As shown in FIG. 19, the two drive apparatuses 310 are close to each other, and the plurality of second circular arc parts 308 are kept apart. In this case, the operating diameter of the transmission wheel is relatively large. As shown in FIG. 20, a distance between the two drive apparatuses 310 becomes larger, the plurality of second circular arc parts 308 are close to each other, and two adjacent second circular arc parts 308 are in contact. In this case, the operating diameter of the transmission wheel is the smallest.

The drive apparatus 310 may be a hydraulic drive apparatus, or may be a motor drive apparatus. This is not limited in this application.

It should be noted that the foregoing structure of the transmission wheel is merely three specific examples provided in this embodiment of this application, and does not constitute a limitation on this application. The change of the operating diameter of the transmission wheel may alternatively be implemented in another manner. In addition, each transmission wheel may use a same structure to implement a variable operating diameter, or may use a plurality of different structures to implement a variable operating diameter. This is not limited in this application.

The following describes a working procedure of the vehicle steering apparatus provided in this embodiment of this application with reference to specific scenarios.
(1) Both the left front wheel steering subsystem 21 and the right front wheel steering subsystem 22 are in a power-effective state. In this case, the vehicle steering apparatus enters a normal operating mode, as shown in FIG. 9.

In a possible implementation, the vehicle steering apparatus further includes the controller. The controller is configured to: when the left front wheel steering subsystem 21 and the right front wheel steering subsystem 22 are in a power-effective state, control the intermediate clutch 4, the left front clutch 5, and the right front clutch 6 to be in a disengaged state. The controller is further configured to control the left front wheel steering subsystem 21 and the right front wheel steering subsystem 22 to respectively perform steering actions of corresponding wheels.

The controller may be electrically connected to the left front wheel steering subsystem 21, the right front wheel steering subsystem 22, the intermediate clutch 4, the left front clutch 5, and the right front clutch 6, so that the controller controls each component. Specifically, the controller may be connected to lower steering drive motors in the left front wheel steering subsystem 21 and the right front wheel steering subsystem 22.

In the solution shown in this embodiment of this application, when both the left front wheel steering subsystem 21 and the right front wheel steering subsystem 22 are in a power-effective state, all the intermediate clutch 4, the left front clutch 5, and the right front clutch 6 may be controlled to be in a disengaged state, so that the left front wheel steering subsystem 21 and the right front wheel steering subsystem 22 are mechanically decoupled from the upper steering system 1. In this case, the left front wheel steering subsystem 21 and the right front wheel steering subsystem 22 may respectively perform the steering actions of the corresponding wheels, to avoid mutual interference between the upper steering system 1, left front wheel steering subsystem 21, and right front wheel steering subsystem 22.

A vehicle on which the vehicle steering apparatus provided in this embodiment of this application is installed may include two driving modes: an automatic driving mode and a manual driving mode. The following describes in detail a control procedure of the controller with reference to specific scenarios of the automatic driving mode and the manual driving mode.

In the automatic driving mode, when determining that the left front wheel steering subsystem 21 and the right front wheel steering subsystem 22 are in a power-effective state, the controller controls all the intermediate clutch 4, the left front clutch 5, and the right front clutch 6 to be in a disengaged state. Then, the controller determines steering angles of the left front wheel and the right front wheel in real time based on external data detected by the sensor, and sends corresponding steering angle signals to the left front wheel steering subsystem 21 and the right front wheel steering subsystem 22. The left front wheel steering subsystem 21 and the right front wheel steering subsystem 22 respectively control steering actions of the left front wheel and the right front wheel based on the received steering angle signals.

In addition, in the automatic driving mode, the upper steering system 1 may be controlled to be in an idle state and the steering wheel 12 remains stationary, so that automatic driving experience of the driver is improved.

In the manual driving mode, when determining that the left front wheel steering subsystem 21 and the right front wheel steering subsystem 22 are in a power-effective state, the controller controls all the intermediate clutch 4, the left front clutch 5, and the right front clutch 6 to be in a disengaged state. Then, the controller determines steering angles of the left front wheel and the right front wheel based on steering angle signals of the steering wheel detected by the sensor, and sends corresponding steering angle signals to the left front wheel steering subsystem 21 and the right front wheel steering subsystem 22. The left front wheel steering subsystem 21 and the right front wheel steering subsystem 22 respectively control steering actions of the left front wheel and the right front wheel based on the received steering angle signals.

In addition, because the upper steering system 1 is mechanically decoupled from the lower steering system 2, the driver cannot sense a road surface condition when operating the steering wheel. Therefore, steering resistance may be applied to the steering wheel by using the upper steering system 1 to simulate real road sensing. Because the driver's road sense is generated through simulation, information that can best reflect an actual driving state of the vehicle and a road surface condition may be extracted and used as a control variable of a torque at which the steering wheel returns to a center position, so that the steering wheel only provides useful information for the driver, thereby providing more real road sensing for the driver.

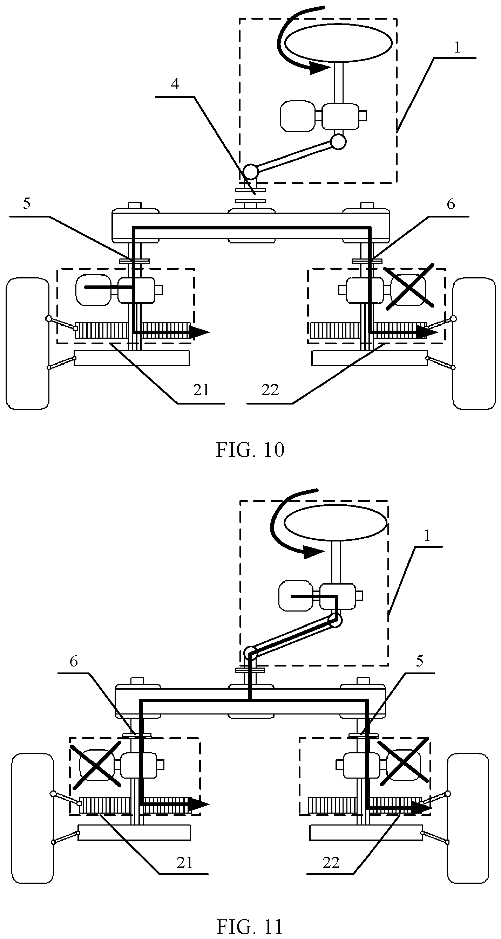

(2) Only one of the left front wheel steering subsystem 21 and the right front wheel steering subsystem 22 is in a power failure state. In this case, the vehicle steering apparatus enters a lower single-side assist mode, as shown in FIG. 10.

In a possible implementation, the controller is further configured to: when only one of the left front wheel steering subsystem 21 and the right front wheel steering subsystem 22 is in a power failure state, control the intermediate clutch 4 to be in a disengaged state, and control the left front clutch 5 and the right front clutch 6 to be in an engaged state.

The controller is further configured to control a power-effective steering subsystem to perform a steering action of a corresponding wheel, and transfer power to a power-ineffective steering subsystem by using the front wheel steering transmission assembly 3, so that the power-ineffective steering subsystem performs a steering action of a corresponding wheel.

In the solution shown in this embodiment of this application, when only one of the left front wheel steering subsystem 21 and the right front wheel steering subsystem 22 is in a power-effective state, the intermediate clutch 4 may be controlled to be in a disengaged state, and the left front clutch 5 and the right front clutch 6 may be controlled to be in a disengaged state, so that power transfer can be completed between the left front wheel steering subsystem 21 and the right front wheel steering subsystem 22.

In the automatic driving mode, when determining that only one of the left front wheel steering subsystem 21 and the right front wheel steering subsystem 22 is in a power-effective state, the controller controls the intermediate clutch 4 to be in a disengaged state, and both the left front clutch 5 and the right front clutch 6 to be in an engaged state. Then, the controller determines a target steering angle of the wheel in real time based on external data detected by the sensor, and sends corresponding steering angle signals to the left front wheel steering subsystem 21 and the right front wheel steering subsystem 22 (or only sends to a power-effective steering subsystem). The power-effective steering subsystem performs a steering action of a corresponding wheel based on the received steering angle signal. In addition, power of the power-effective steering subsystem may be transferred to the power-ineffective steering subsystem by using the front wheel steering transmission assembly 3, so that the power-ineffective steering subsystem may perform a steering action of a corresponding wheel.

In addition, in the automatic driving mode, the upper steering system 1 may be controlled to be in an idle state and the steering wheel remains stationary, so that automatic driving experience of the driver is improved.

In the manual driving mode, when determining that only one of the left front wheel steering subsystem 21 and the right front wheel steering subsystem 22 is in a power-effective state, the controller controls the intermediate clutch 4 to be in a disengaged state, and both the left front clutch 5 and the right front clutch 6 to be in an engaged state. Then, the controller determines a steering angle of the wheel in real time based on a steering angle signal of the steering wheel detected by the sensor, and sends corresponding steering angle signals to the left front wheel steering subsystem 21 and the right front wheel steering subsystem 22 (or only sends to a power-effective steering subsystem). The power-effective steering subsystem performs a steering action of a corresponding wheel based on the received steering angle signal. In addition, power of the power-effective steering subsystem may be transferred to the power-ineffective steering subsystem by using the front wheel steering transmission assembly 3, so that the power-ineffective steering subsystem may perform a steering action of a corresponding wheel.

In addition, because the upper steering system 1 is mechanically decoupled from the lower steering system 2, the driver cannot sense a road surface condition when operating the steering wheel. Therefore, steering resistance may be applied to the steering wheel by using the upper steering system 1 to simulate real road sensing. Because the driver's road sense is generated through simulation, information that can best reflect an actual driving state of the vehicle and a road surface condition may be extracted and used as a control variable of a torque at which the steering wheel returns to a center position, so that the steering wheel only provides useful information for the driver, thereby providing more real road sensing for the driver.

In a possible implementation, the controller is further configured to control changes of the operating diameters of the left front transmission wheel 32 and the right front transmission wheel 33, to change the transmission ratio of the left front transmission wheel 32 to the right front transmission wheel 33, so that different steering angles of the left front wheel and the right front wheel are implemented.

The controller may further be electrically connected to the left front transmission wheel 32 and the right front transmission wheel 33, to control the operating diameters of the left front transmission wheel 32 and the right front transmission wheel 33.

In the solution shown in this embodiment of this application, the changes of the operating diameters of the left front transmission wheel 32 and the right front transmission wheel 33 may be correspondingly adjusted, to change the transmission ratio of the left front transmission wheel 32 to the right front transmission wheel 33, so that different steering angles of the left front wheel and the right front wheel may be implemented.

Specifically, in the automatic driving mode, when determining that only one of the left front wheel steering subsystem 21 and the right front wheel steering subsystem 22 is in a power-effective state, the controller controls the intermediate clutch 4 to be in a disengaged state, and both the left front clutch 5 and the right front clutch 6 to be in an engaged state. Then, the controller determines target steering angles of the left front wheel and the right front wheel in real time based on the external data detected by the sensor, and determines a steering angle of the power-effective steering subsystem and target operating diameters of the left front transmission wheel 32 and the right front transmission wheel 33 based on the target steering angles of the two wheels. Then, the controller sends the steering angle signal to the power-effective steering subsystem, and sends respective target operating diameter signals to the left front transmission wheel 32 and the right front transmission wheel 33, so that the operating diameters of the left front transmission wheel 32 and the right front transmission wheel 33 become respective target operating diameters. In this way, the power-effective steering subsystem controls, based on the steering angle signal, a corresponding wheel to rotate a corresponding steering angle, and transfers rotation to the power-ineffective steering subsystem by using the front wheel steering transmission assembly 3, so that rotation of the power-ineffective steering subsystem is in a target proportion to rotation of the power-effective steering subsystem. The power-ineffective steering subsystem controls a corresponding wheel to complete rotation, and a rotation angle is the target steering angle determined by the controller.

In the manual driving mode, when determining that only one of the left front wheel steering subsystem 21 and the right front wheel steering subsystem 22 is in a power-effective state, the controller controls the intermediate clutch 4 to be in a disengaged state, and both the left front clutch 5 and the right front clutch 6 to be in an engaged state. Then, the controller determines the steering angles of the left front wheel and the right front wheel based on the steering angle signal of the steering wheel detected by the sensor, and determines the steering angle of the power-effective steering subsystem and target operating diameters of the left front transmission wheel 32 and the right front transmission wheel 33 based on the steering angles of the two wheels. Then, the controller sends the steering angle signal to the power-effective steering subsystem, and sends respective target operating diameter signals to the left front transmission wheel 32 and the right front transmission wheel 33, so that the operating diameters of the left front transmission wheel 32 and the right front transmission wheel 33 become respective target operating diameters. In this way, the power-effective steering subsystem controls, based on the steering angle signal, a corresponding wheel to rotate a corresponding steering angle, and transfers rotation to the power-ineffective steering subsystem by using the front wheel steering transmission assembly 3, so that rotation of the power-ineffective steering subsystem is in a target proportion to rotation of the power-effective steering subsystem. The power-ineffective steering subsystem controls a corresponding wheel to complete rotation, and a rotation angle is the target steering angle determined by the controller.

In addition, in a process in which the operating diameters of the left front transmission wheel 32 and the right front transmission wheel 33 change, the tension of the first transmission belt 34 changes, that is, the degree of tightness of the first transmission belt 34 changes. This affects power transfer between the left front transmission wheel 32 and the right front transmission wheel 33. Therefore, when controlling the changes of the operating diameters of the left front transmission wheel 32 and the right front transmission wheel 33, the controller may further control the change of the operating diameter of the intermediate transmission wheel 31, to adjust the tension of the first transmission belt 34.

Alternatively, a tension wheel may be disposed. The tension wheel is configured to adjust the tension of the first transmission belt 34, so that the operating diameter of the intermediate transmission wheel 31 may not be changed, and the intermediate transmission wheel 31 may be a common fixed-diameter transmission wheel.

(3) Both the left front wheel steering subsystem 21 and the right front wheel steering subsystem 22 are in a power failure state, and the upper steering drive motor 11 in the upper steering system 1 is in a power-effective state. In this case, the vehicle steering apparatus enters an upper assist mode, as shown in FIG. 11.

In a possible implementation, the controller is further configured to: when both the left front wheel steering subsystem 21 and the right front wheel steering subsystem 22 are in a power failure state, and the upper steering drive motor 11 in the upper steering system 1 is in a power-effective state, control all the intermediate clutch 4, the left front clutch 5, and the right front clutch 6 to be in an engaged state.

The controller is further configured to control the upper steering drive motor 11 in the upper steering system 1 to transfer power to the left front wheel steering subsystem 21 and the right front wheel steering subsystem 22 by using the front wheel steering transmission assembly 3, to perform the steering actions of the left front wheel and the right front wheel.

In the solution shown in this embodiment of this application, when both the left front wheel steering subsystem 21 and the right front wheel steering subsystem 22 are in a power failure state, and the upper steering drive motor 11 in the upper steering system 1 is in a power-effective state, the controller may control the intermediate clutch 4, the left front clutch 5, and the right front clutch 6 to be in an engaged state, to complete a mechanical connection between the upper steering system 1 and the lower steering system 2.

In the automatic driving mode, when determining that both the left front wheel steering subsystem 21 and the right front wheel steering subsystem 22 are in a power failure state, and the upper steering drive motor 11 in the upper steering system 1 is in a power-effective state, the controller controls all the intermediate clutch 4, the left front clutch 5, and the right front clutch 6 to be in an engaged state. Then, the controller determines the steering angle of the wheel in real time based on the external data detected by the sensor, determines a steering angle of the upper steering drive motor 11 based on the steering angle of the wheel, and sends a corresponding steering angle signal to the upper steering drive motor 11. Rotation of the upper steering drive motor 11 is transferred to the left front wheel steering subsystem 21 and the right front wheel steering subsystem 22 by using the front wheel steering transmission assembly 3, to implement the steering actions of the left front wheel and the right front wheel.

In the manual driving mode, when determining that both the left front wheel steering subsystem 21 and the right front wheel steering subsystem 22 are in a power failure state, and the upper steering drive motor 11 in the upper steering system 1 is in a power-effective state, the controller controls all the intermediate clutch 4, the left front clutch 5, and the right front clutch 6 to be in an engaged state. Then, power input by the upper steering drive motor 11 and power output by the driver are respectively transferred to the left front wheel steering subsystem 21 and the right front wheel steering subsystem 22 by using the front wheel steering transmission assembly 3, to implement the steering actions of the left front wheel and the right front wheel.

It should be noted that in the manual driving mode in which the upper steering system 1 and the lower steering system 2 are mechanically connected, steering power of the lower steering system 2 is provided by the upper steering system 1. Therefore, in this case, the upper steering drive motor 11 provides steering driving force instead of steering resistance provided when the road sensing is simulated.

In a possible implementation, the controller is further configured to control changes of the operating diameters of the left front transmission wheel 32 and the right front transmission wheel 33, to change the transmission ratio of the left front transmission wheel 32 to the right front transmission wheel 33, so that different steering angles of the left front wheel and the right front wheel are implemented.

In the solution shown in this embodiment of this application, the changes of the operating diameters of the left front transmission wheel 32 and the right front transmission wheel 33 may be correspondingly adjusted, to change the transmission ratio of the left front transmission wheel 32 to the right front transmission wheel 33, so that different steering angles of the left front wheel and the right front wheel may be implemented.

Specifically, in the automatic driving mode, when determining that both the left front wheel steering subsystem 21 and the right front wheel steering subsystem 22 are in a power failure state, and the upper steering drive motor 11 in the upper steering system 1 is in a power-effective state, the controller controls all the intermediate clutch 4, the left front clutch 5, and the right front clutch 6 to be in an engaged state. Then, the controller determines steering angles of the left front wheel and the right front wheel in real time based on the external data detected by the sensor, and determines the steering angle of the upper steering drive motor 11 and target operating diameters of the left front transmission wheel 32 and the right front transmission wheel 33 based on the steering angles of the two wheels. Then, the controller sends the steering angle signal to the upper steering drive motor 11, and sends respective target operating diameter signals to the left front transmission wheel 32 and the right front transmission wheel 33, so that the operating diameters of the left front transmission wheel 32 and the right front transmission wheel 33 become respective target operating diameters. In this way, the upper steering drive motor 11 rotates at a corresponding angle based on the steering angle signal, and transfers rotation to the power-ineffective lower steering system 2 by using the front wheel steering transmission assembly 3. In addition, rotation of the left front wheel steering subsystem 21 is in a target ratio to rotation of the right front wheel steering subsystem 22, the left front wheel steering subsystem 21 and the right front wheel steering subsystem 22 control corresponding wheels to complete rotation, and rotation angles are the steering angles determined by the controller.

In the manual driving mode, when determining that both the left front wheel steering subsystem 21 and the right front wheel steering subsystem 22 are in a power failure state, and the upper steering drive motor 11 in the upper steering system 1 is in a power-effective state, the controller controls all the intermediate clutch 4, the left front clutch 5, and the right front clutch 6 to be in an engaged state. Then, the controller determines the target operating diameters of the left front transmission wheel 32 and the right front transmission wheel 33 based on rotation angle signal of the steering wheel detected by the sensor. Then, the controller changes the operating diameters of the left front transmission wheel 32 and the right front transmission wheel 33 to respective target operating diameters. In this way, power input by the upper steering drive motor 11 and power output by the driver are transferred, by using the front wheel steering transmission assembly 3, to the power-ineffective lower steering system 2. In addition, rotation of the left front wheel steering subsystem 21 is in a target ratio to rotation of the right front wheel steering subsystem 22, the left front wheel steering subsystem 21 and the right front wheel steering subsystem 22 control corresponding wheels to complete rotation, and rotation angles are the steering angles determined by the controller.

In addition, in a process in which the operating diameters of the left front transmission wheel 32 and the right front transmission wheel 33 change, the tension of the first transmission belt 34 changes, that is, the degree of tightness of the first transmission belt 34 changes. This affects power transfer between the left front transmission wheel 32 and the right front transmission wheel 33. Therefore, when controlling the changes of the operating diameters of the left front transmission wheel 32 and the right front transmission wheel 33, the controller may further control the change of the operating diameter of the intermediate transmission wheel 31, to adjust the tension of the first transmission belt 34.

Alternatively, a tension wheel may be disposed. The tension wheel is configured to adjust the tension of the first transmission belt 34, so that the operating diameter of the intermediate transmission wheel 31 may not be changed, and the intermediate transmission wheel 31 may be a common fixed-diameter transmission wheel.

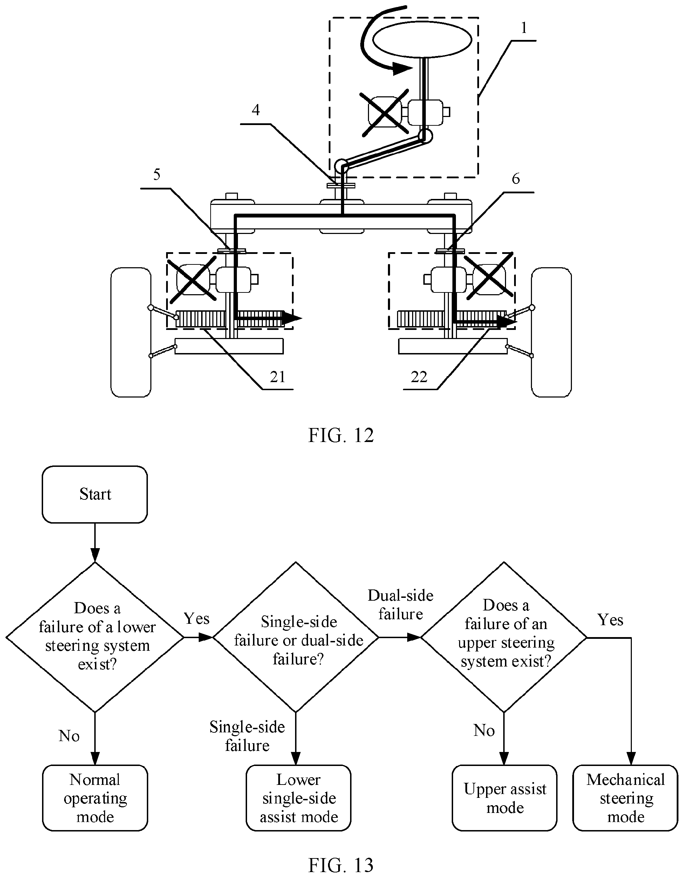

(4) Both the left front wheel steering subsystem 21 and the right front wheel steering subsystem 22 are in a power failure state, and the upper steering drive motor 11 in the upper steering system 1 is in a power failure state. In this case, the vehicle steering apparatus enters a mechanical steering mode, as shown in FIG. 12.

In a possible implementation, the controller is further configured to: when both the left front wheel steering subsystem 21 and the right front wheel steering subsystem 22 are in a power failure state, and the upper steering drive motor 11 in the upper steering system 1 is in a power failure state, control all the intermediate clutch 4, the left front clutch 5, and the right front clutch 6 to be in an engaged state.

In the solution shown in this embodiment of this application, when both the left front wheel steering subsystem 21 and the right front wheel steering subsystem 22 are in a power failure state, and the upper steering drive motor 11 in the upper steering system 1 is in a power failure state, the controller may control the intermediate clutch 4, the left front clutch 5, and the right front clutch 6 to be in an engaged state, to complete a mechanical connection between the upper steering system 1 and the lower steering system 2.

A vehicle on which the vehicle steering apparatus provided in this embodiment of this application is installed may include two driving modes: an automatic driving mode and a manual driving mode. However, when both the upper steering system 1 and the lower steering system 2 are in a power failure state, the vehicle cannot enter the automatic driving mode.

In the manual driving mode, the driver manually rotates the steering wheel to generate steering power. Then, the steering power is transferred to the left front wheel steering subsystem 21 and the right front wheel steering subsystem 22 by using the front wheel steering transmission assembly 3, to perform the steering actions of the left front wheel and the right front wheel.

In a possible implementation, the controller is further configured to control changes of the operating diameters of the left front transmission wheel 32 and the right front transmission wheel 33, to change the transmission ratio of the left front transmission wheel 32 to the right front transmission wheel 33, so that different steering angles of the left front wheel and the right front wheel are implemented.

In the solution shown in this embodiment of this application, the changes of the operating diameters of the left front transmission wheel 32 and the right front transmission wheel 33 may be correspondingly adjusted, to change the transmission ratio of the left front transmission wheel 32 to the right front transmission wheel 33, so that different steering angles of the left front wheel and the right front wheel may be implemented.

Specifically, in the manual driving mode, when determining that both the left front wheel steering subsystem 21 and the right front wheel steering subsystem 22 are in a power failure state, and the upper steering drive motor 11 in the upper steering system 1 is in a power failure state, the controller controls all the intermediate clutch 4, the left front clutch 5, and the right front clutch 6 to be in an engaged state. Then, the controller determines steering angles of the left front wheel and the right front wheel based on steering angle signal of the steering wheel detected by the sensor, and determines target operating diameters of the left front transmission wheel 32 and the right front transmission wheel 33 based on the steering angles of the two wheels. Then, the controller changes the operating diameters of the left front transmission wheel 32 and the right front transmission wheel 33 to respective target operating diameters.

Then, the manually generated steering power of the upper steering system 1 is transferred to the left front wheel steering subsystem 21 and the right front wheel steering subsystem 22 by using the front wheel steering transmission assembly 3, to perform the steering actions of the left front wheel and the right front wheel. Rotation angles are the steering angles determined by the controller.

In addition, in a process in which the operating diameters of the left front transmission wheel 32 and the right front transmission wheel 33 change, the tension of the first transmission belt 34 changes, that is, the degree of tightness of the first transmission belt 34 changes. This affects power transfer between the left front transmission wheel 32 and the right front transmission wheel 33. Therefore, when controlling the changes of the operating diameters of the left front transmission wheel 32 and the right front transmission wheel 33, the controller may further control the change of the operating diameter of the intermediate transmission wheel 31, to adjust the tension of the first transmission belt 34.

Alternatively, a tension wheel may be disposed. The tension wheel is configured to adjust the tension of the first transmission belt 34, so that the operating diameter of the intermediate transmission wheel 31 may not be changed, and the intermediate transmission wheel 31 may be a common fixed-diameter transmission wheel.

FIG. 13 is a mode selection flowchart of the vehicle steering apparatus according to an embodiment of this application.

The controller determines whether a failure of a lower steering system exists. If the failure of the lower steering system does not exist, the vehicle steering apparatus enters the normal operating mode.

If the lower steering system is ineffective, a single-side failure or a dual-side failure is determined. In case of the single-side failure, the vehicle steering apparatus enters the lower single-side assist mode.

In case of the dual-side failure, whether the upper steering system is ineffective is determined. If the upper steering system does not fail, the vehicle steering apparatus enters the upper assist mode.

If the upper steering system is ineffective, the vehicle steering apparatus enters the mechanical steering mode.

The vehicle steering apparatus provided in this embodiment of this application may be a two-wheel steering apparatus, or may be a four-wheel steering apparatus. When the vehicle steering apparatus provided in this embodiment of this application is a four-wheel steering apparatus, a working procedure of the vehicle steering apparatus further includes the following steps.

(5) Both the left rear wheel steering subsystem 23 and the right rear wheel steering subsystem 24 are in a power-effective state.

In a possible implementation, the vehicle steering apparatus further includes the controller. The controller is configured to: when both the left rear wheel steering subsystem 23 and the right rear wheel steering subsystem 24 are in a power-effective state, control the left rear clutch 8 and the right rear clutch 9 to be in a disengaged state.

The controller is further configured to control the left rear wheel steering subsystem 23 and the right rear wheel steering subsystem 24 to respectively perform steering actions of corresponding wheels.

The controller may be electrically connected to the left rear wheel steering subsystem 23, the right rear wheel steering subsystem 24, the left rear clutch 8, and the right rear clutch 9, so that the controller controls each component. Specifically, the controller may be separately connected to lower steering drive motors in the left rear wheel steering subsystem 23 and the right rear wheel steering subsystem 24.

In the solution shown in this embodiment of this application, steering of the left front wheel and the right front wheel may be controlled according to the foregoing control manners in (1) to (4). The following describes only steering control of the left rear wheel and the right rear wheel.

When both the left rear wheel steering subsystem 23 and the right rear wheel steering subsystem 24 are in a power-effective state, both the left rear clutch 8 and the right rear clutch 9 may be controlled to be in a disengaged state, so that the left rear wheel steering subsystem 23 is mechanically decoupled from the right rear wheel steering subsystem 24. In this case, the left rear wheel steering subsystem 23 and the right rear wheel steering subsystem 24 can respectively perform steering actions of corresponding wheels, to avoid mutual interference between the left rear wheel steering subsystem 23 and the right rear wheel steering subsystem 24.

In the automatic driving mode, when determining that both the left rear wheel steering subsystem 23 and the right rear wheel steering subsystem 24 are in a power-effective state, the controller controls both the left rear clutch 8 and the right rear clutch 9 to be in a disengaged state. Then, the controller determines steering angles of the left rear wheel and the right rear wheel in real time based on external data detected by the sensor, and sends corresponding steering angle signals to the left rear wheel steering subsystem 23 and the right rear wheel steering subsystem 24. The left rear wheel steering subsystem 23 and the right rear wheel steering subsystem 24 respectively control steering actions of the left rear wheel and the right rear wheel based on the received steering angle signals.

In the manual driving mode, when determining that the left rear wheel steering subsystem 23 and the right rear wheel steering subsystem 24 are in a power-effective state, the controller controls both the left rear clutch 8 and the right rear clutch 9 to be in a disengaged state. Then, the controller determines steering angles of the left rear wheel and the right rear wheel based on steering angle signals of the steering wheel detected by the sensor, and sends corresponding steering angle signals to the left rear wheel steering subsystem 23 and the right rear wheel steering subsystem 24. The left rear wheel steering subsystem 23 and the right rear wheel steering subsystem 24 respectively control steering actions of the left rear wheel and the right rear wheel based on the received steering angle signals.

(6) Only one of the left rear wheel steering subsystem 23 and the right rear wheel steering subsystem 24 is in a power failure state.

In a possible implementation, the controller is further configured to: when only one of the left rear wheel steering subsystem 23 and the right rear wheel steering subsystem 24 is in a power failure state, control the left rear clutch 8 and the right rear clutch 9 to be in an engaged state.

The controller is further configured to control a power-effective steering subsystem to perform a steering action of a corresponding wheel, and transfer power to a power-ineffective steering subsystem by using the rear wheel steering transmission assembly 7, to perform a steering action of a wheel corresponding to the power-ineffective steering subsystem.

In the solution shown in this embodiment of this application, when only one of the left rear wheel steering subsystem 23 and the right rear wheel steering subsystem 24 is in a power-effective state, the left rear clutch 8 and the right rear clutch 9 may be controlled to be in an engaged state, so that power transfer can be completed between the left rear wheel steering subsystem 23 and the right rear wheel steering subsystem 24.

In the automatic driving mode, when determining that only one of the left rear wheel steering subsystem 23 and the right rear wheel steering subsystem 24 is in a power-effective state, the controller controls both the left rear clutch 8 and the right rear clutch 9 to be in an engaged state. Then, the controller determines a target steering angle of the wheel in real time based on external data detected by the sensor, and sends corresponding steering angle signals to the left rear wheel steering subsystem 23 and the right rear wheel steering subsystem 24 (or only sends to a power-effective steering subsystem). The power-effective steering subsystem performs a steering action of a corresponding wheel based on the received steering angle signal. In addition, power of the power-effective steering subsystem may be transferred to the power-ineffective steering subsystem by using the rear wheel steering transmission assembly 7, so that the power-ineffective steering subsystem may perform a steering action of a corresponding wheel.

In the manual driving mode, when determining that only one of the left rear wheel steering subsystem 23 and the right rear wheel steering subsystem 24 is at a steering angle of the power steering wheel, the controller controls both the left rear clutch 8 and the right rear clutch 9 to be in an engaged state. Then, the controller determines a target steering angle of the wheel in real time based on external data detected by the sensor, and sends corresponding steering angle signals to the left rear wheel steering subsystem 23 and the right rear wheel steering subsystem 24 (or only sends to a power-effective steering subsystem). The power-effective steering subsystem performs a steering action of a corresponding wheel based on the received steering angle signal. In addition, power of the power-effective steering subsystem may be transferred to the power-ineffective steering subsystem by using the rear wheel steering transmission assembly 7, so that the power-ineffective steering subsystem may perform a steering action of a corresponding wheel.

In a possible implementation, the controller is further configured to control changes of the operating diameters of the left rear transmission wheel 71 and the right rear transmission wheel 72, to change the transmission ratio of the left rear transmission wheel 71 to the right rear transmission wheel 72, so that different steering angles of the left rear wheel and the right rear wheel are implemented.

The controller may further be electrically connected to the left rear transmission wheel 71 and the right rear transmission wheel 72, to control the operating diameters of the left rear transmission wheel 71 and the right rear transmission wheel 72.

In the solution shown in this embodiment of this application, changes of the operating diameters of the left rear transmission wheel 71 and the right rear transmission wheel 72 may be correspondingly adjusted, to change the transmission ratio of the left rear transmission wheel 71 to the right rear transmission wheel, so that different steering angles of the left rear wheel and the right rear wheel may be implemented.

Specifically, in the automatic driving mode, when determining that only one of the left rear wheel steering subsystem 23 and the right rear wheel steering subsystem 24 is in a power-effective state, the controller controls both the left rear clutch 8 and the right rear clutch 9 to be in an engaged state. Then, the controller determines the target steering angles of the wheels in real time based on the external data detected by the sensor, and determines a target steering angle of the normal-effective subsystem and target operating diameters of the left rear transmission wheel 71 and the right rear transmission wheel 72 based on the target steering angles of the two wheels. Then, the controller sends the steering angle signal to the power-effective steering subsystem, and sends respective target operating diameter signals to the left rear transmission wheel 71 and the right rear transmission wheel 72, so that the operating diameters of the left rear transmission wheel 71 and the right rear transmission wheel 72 become respective target operating diameters. In this way, the power-effective steering subsystem controls, based on the steering angle signal, a corresponding wheel to rotate a corresponding steering angle, and transmits rotation to the power-ineffective steering subsystem by using the rear wheel steering transmission assembly 7, so that rotation of the power-ineffective steering subsystem is in a target proportion to rotation of the power-effective steering subsystem. The power-ineffective steering system controls a corresponding wheel to complete rotation, and a rotation angle is the target steering angle determined by the controller.

In the manual driving mode, when determining that only one of the left rear wheel steering subsystem 23 and the right rear wheel steering subsystem 24 is in a power-effective state, the controller controls both the left rear clutch 8 and the right rear clutch 9 to be in an engaged state. Then, the controller determines the target steering angles of the wheels based on a steering angle of the steering wheel detected by the sensor, and determines a target steering angle of the power-effective subsystem and target operating diameters of the left rear transmission wheel 71 and the right rear transmission wheel 72 based on the target steering angles of the two wheels. Then, the controller sends the steering angle signal to the power-effective steering subsystem, and sends respective target operating diameter signals to the left rear transmission wheel 71 and the right rear transmission wheel 72, so that the operating diameters of the left rear transmission wheel 71 and the right rear transmission wheel 72 become respective target operating diameters. In this way, the power-effective steering subsystem controls, based on the steering angle signal, a corresponding wheel to rotate a corresponding steering angle, and transmits rotation to the power-ineffective steering subsystem by using the rear wheel steering transmission assembly 7, so that rotation of the power-ineffective steering subsystem is in a target proportion to rotation of the power-effective steering subsystem. The power-ineffective steering subsystem controls a corresponding wheel to complete rotation, and a rotation angle is the target steering angle determined by the controller.

In addition, in a process in which the operating diameters of the left rear transmission wheel 71 and the right rear transmission wheel 72 change, the tension of the second transmission belt 73 changes, that is, the degree of tightness of the second transmission belt 73 changes. This affects power transfer between the left rear transmission wheel 71 and the right rear transmission wheel 72. Therefore, when controlling the changes of the operating diameters of the left rear transmission wheel 71 and the right rear transmission wheel 72, the controller may further control the change of the operating diameter of the adjusting transmission wheel 74, to adjust the tension of the second transmission belt 73.

Alternatively, the operating diameter of the adjusting transmission wheel 74 may not be variable, and the adjusting transmission wheel 74 is a tension wheel.

(7) Both the left rear wheel steering subsystem 23 and the right rear wheel steering subsystem 24 are in a power failure state.

If both the left rear wheel steering subsystem 23 and the right rear wheel steering subsystem 24 are in a power failure state, because the left rear wheel steering subsystem 23 and the right rear wheel steering subsystem 24 are mechanically decoupled from the upper steering system 1, the left rear wheel steering subsystem 23 and the right rear wheel steering subsystem 24 do not have a function of controlling wheel steering in the power failure state. The four-wheel steering apparatus changes into a two-wheel steering apparatus, and the left rear wheel and the right rear wheel follow steering. In this case, the controller may control the left rear clutch 8 and the right rear clutch 9 to be in a disengaged state, to avoid mutual interference between the left rear wheel and the right rear wheel during following steering

The following describes several typical steering states of the four-wheeled vehicle steering apparatus:
straight stability, low-speed steering, high-speed stability, and in-place steering

As shown in FIG. 14, straight stability means independent steering of four wheels, which can separately correct a small size of a tire in a small range in an abnormal case of a vehicle, to make straight driving more stable.

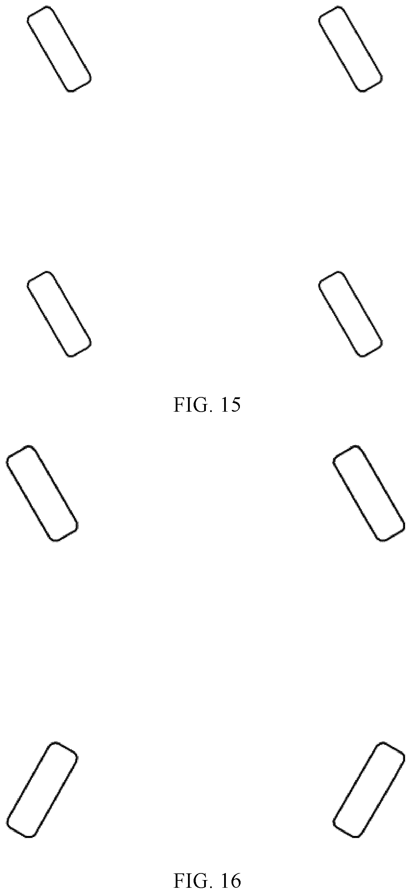

As shown in FIG. 15, high-speed stability means that the front wheel and the rear wheel are in a same direction in a process of driving at a high speed, so that translation and steering can be more stable at the high speed

As shown in FIG. 16, low-speed steering means that in a low-speed case, the front wheel and the rear wheel are reversed, so that a function of reducing a turning radius may be implemented.

As shown in FIG. 7, in-place steering means that a function of in-place direct steering of a vehicle may be implemented.

In conclusion, the vehicle steering apparatus provided in this embodiment of this application has at least the following advantageous effects.

First, safety of the vehicle steering apparatus provided in this embodiment of this application is relatively high When both the upper steering system 1 and the lower steering system 2 are in a power failure state, the driver may further manually output power steering

Second, a plurality of steering subsystems included in the lower steering system 2 may independently control steering of a corresponding wheel, so that steering of the vehicle is more flexible.

Third, a function of changing the Ackermann angle may be implemented in a plurality of modes. After single-side failure of lower steering, angle control for inconsistency between the left front wheel and the right front wheel may be implemented by using a normal side and the front wheel steering transmission assembly 3, to implement a function of changing the Ackermann angle. After dual-side failure of lower steering, a mechanical connection may be implemented, and the function of changing the Ackermann angle can still be implemented through switching to an upper steering assist operating mode. When both the upper steering system and the lower steering system fail, safety may be ensured through final mechanical steering and the function of changing the Ackermann angle can still be implemented. A speed ratio may be adjusted, to reduce steering hand force.

An embodiment of this application further provides a vehicle. The vehicle includes the vehicle steering apparatus according to any one of the foregoing.

## Claims

1. A vehicle steering apparatus, comprising an upper steering system (1), a lower steering system (2), a front wheel steering transmission assembly (3), an intermediate clutch (4), a left front clutch (5), and a right front clutch (6), wherein
the front wheel steering transmission assembly (3) comprises an intermediate transmission wheel (31), a left front transmission wheel (32), a right front transmission wheel (33), and a first transmission belt (34); and the intermediate transmission wheel (31), the left front transmission wheel (32), and the right front transmission wheel (33) are in transmission connection by using the first transmission belt (34);
the lower steering system (2) comprises a left front wheel steering subsystem (21) and a right front wheel steering subsystem (22); and
the upper steering system (1) is connected to the intermediate transmission wheel (31) by using the intermediate clutch (4), the left front wheel steering subsystem (21) is connected to the left front transmission wheel (32) by using the left front clutch (5), and the right front wheel steering subsystem (22) is connected to the right front transmission wheel (33) by using the right front clutch (6), and
wherein an operating diameter of at least one of the left front transmission wheel (32) and the right front transmission wheel (33) is variable.

2. The vehicle steering apparatus according to claim 1, wherein an operating diameter of the intermediate transmission wheel (31) is variable.

3. The vehicle steering apparatus according to any one of claims 1 or 2, wherein the lower steering system (2) further comprises a left rear wheel steering subsystem (23) and a right rear wheel steering subsystem (24); the vehicle steering apparatus further comprises a rear wheel steering transmission assembly (7), a left rear clutch (8), and a right rear clutch (9); the rear wheel steering transmission assembly (7) comprises a left rear transmission wheel (71), a right rear transmission wheel (72), and a second transmission belt (73); and the left rear transmission wheel (71) and the right rear transmission wheel (72) are in transmission connection by using the second transmission belt (73); and
the left rear wheel steering subsystem (23) is connected to the left rear transmission wheel (71) by using the left rear clutch (8), and the right rear wheel steering subsystem (24) is connected to the right rear transmission wheel (72) by using the right rear clutch (9).

4. The vehicle steering apparatus according to claim 3, wherein an operating diameter of at least one of the left rear transmission wheel (71) and the right rear transmission wheel (72) is variable.

5. The vehicle steering apparatus according to claim 4, wherein the rear wheel steering transmission assembly (7) further comprises an adjusting transmission wheel (74) configured to adjust tension of the second transmission belt (73), and the left rear transmission wheel (71), the right rear transmission wheel (72), and the adjusting transmission wheel (4) are in transmission connection by using the second transmission belt (73).

6. The vehicle steering apparatus according to claim 5, wherein an operating diameter of the adjusting transmission wheel (74) is variable.

7. The vehicle steering apparatus according to any one of claims 1 to 6, wherein the upper steering system (1) comprises an upper steering drive motor (11).

8. The vehicle steering apparatus according to any one of claims 1 to 7, wherein each transmission wheel comprises a first tapered disk (301), a second tapered disk (302), a transmission shaft (303), and a tapered disk drive apparatus (304), the first tapered disk (301) and the second tapered disk (302) are sleeved on the transmission shaft (303), and tapered surfaces of the first tapered disk (301) and the second tapered disk (302) are opposite to each other;
the tapered disk drive apparatus (4) is configured to control a distance between the first tapered disk (301) and the second tapered disk (302), to change an operating diameter of the transmission wheel; and
the transmission wheel is the intermediate transmission wheel (31), the left front transmission wheel (32), the right front transmission wheel (33), the left rear transmission wheel (71), the right rear transmission wheel (72), or the adjusting transmission wheel (74).

9. The vehicle steering apparatus according to any one of claims 1 to 8, wherein the vehicle steering apparatus further comprises a controller, and the controller is configured to: when the left front wheel steering subsystem (21) and the right front wheel steering subsystem (22) are in a power-effective state, control the intermediate clutch (4), the left front clutch (5), and the right front clutch (6) to be in a disengaged state; and
the controller is further configured to control the left front wheel steering subsystem (21) and the right front wheel steering subsystem (22) to respectively perform steering actions of corresponding wheels

10. The vehicle steering apparatus according to claim 9, wherein the controller is further configured to: when only one of the left front wheel steering subsystem (21) and the right front wheel steering subsystem (22) is in a power failure state, control the intermediate clutch (4) to be in a disengaged state, and control the left front clutch (5) and the right front clutch (6) to be in an engaged state; and
the controller is further configured to control a power-effective steering subsystem to perform a steering action of a corresponding wheel, and transfer power to a power-ineffective steering subsystem by using the front wheel steering transmission assembly (3), so that the power-ineffective steering subsystem performs a steering action of a corresponding wheel.

11. The vehicle steering apparatus according to any one of claims 8 to 10, wherein the controller is further configured to: when both the left front wheel steering subsystem (21) and the right front wheel steering subsystem (22) are in a power failure state, and the upper steering drive motor (11) in the upper steering system (1) is in a power-effective state, control all the intermediate clutch (4), the left front clutch (5), and the right front clutch (6) to be in an engaged state; and
the controller is further configured to control the upper steering drive motor (11) in the upper steering system (1) to transfer power to the left front wheel steering subsystem (21) and the right front wheel steering subsystem (22) by using the front wheel steering transmission assembly (3), to perform steering actions of a left front wheel and a right front wheel.

12. The vehicle steering apparatus according to any one of claims 8 to 11, wherein the controller is further configured to: when both the left front wheel steering subsystem (21) and the right front wheel steering subsystem (22) are in a power failure state, and the upper steering drive motor (11) in the upper steering system (1) is in a power failure state, control all the intermediate clutch (4), the left front clutch (5), and the right front clutch (6) to be in an engaged state.

13. The vehicle steering apparatus according to any one of claims 10 to 12, wherein the controller is further configured to control changes of the operating diameters of the left front transmission wheel (32) and the right front transmission wheel (33), to change a transmission ratio of the left front transmission wheel (32) to the right front transmission wheel (33), so that different steering angles of the left front wheel and the right front wheel are implemented.

14. A vehicle, wherein the vehicle comprises the vehicle steering apparatus according to any one of claims 1 to 13.

## Patentansprüche

1. Fahrzeuglenkvorrichtung, umfassend ein oberes Lenksystem (1), ein unteres Lenksystem (2), eine Vorderrad-Lenkgetriebebaugruppe (3), eine Zwischenkupplung (4), eine linke vordere Kupplung (5) und eine rechte vordere Kupplung (6), wobei
die Vorderrad-Lenkgetriebebaugruppe (3) ein Zwischengetrieberad (31), ein linkes vorderes Getrieberad (32), ein rechtes vorderes Getrieberad (33) und einen ersten Treibriemen (34) umfasst; und das Zwischengetrieberad (31), das linke vordere Getrieberad (32) und das rechte vordere Getrieberad (33) unter Verwendung des ersten Treibriemens (34) in Treibverbindung stehen,
das untere Lenksystem (2) ein linkes Vorderrad-Lenkteilsystem (21) und eine rechtes Vorderrad-Lenkteilsystem (22) umfasst und
das obere Lenksystem (1) unter Verwendung der Zwischenkupplung (4) mit dem Zwischengetrieberad (31) verbunden ist, das linke Vorderrad-Lenkteilsystem (21) unter Verwendung der linken vorderen Kupplung (5) mit dem linken vorderen Getrieberad (32) verbunden ist und das rechte Vorderrad-Lenkteilsystem (22) unter Verwendung der rechten vorderen Kupplung (6) mit dem rechten vorderen Getrieberad (33) verbunden ist, und
wobei ein Wirkdurchmesser von mindestens einem von dem linken vorderen Getrieberad (32) und dem rechten vorderen Getrieberad (33) variabel ist.

2. Fahrzeuglenkvorrichtung nach Anspruch 1, wobei der Wirkdurchmesser des Zwischengetrieberads (31) variabel ist.

3. Fahrzeuglenkvorrichtung nach einem der Ansprüche 1 oder 2, wobei das untere Lenksystem (2) ferner ein linkes Hinterrad-Lenkteilsystem (23) und ein rechtes Hinterrad-Lenkteilsystem (24) umfasst; die Fahrzeuglenkvorrichtung ferner eine Hinterrad-Lenkgetriebebaugruppe (7), eine linke hintere Kupplung (8) und eine rechte hintere Kupplung (9) umfasst; die Hinterrad-Lenkgetriebebaugruppe (7) ein linkes hinteres Getrieberad (71), ein rechtes hinteres Getrieberad (72) und einen zweiten Treibriemen (73) umfasst; und das linke hintere Getrieberad (71) und das rechte hintere Getrieberad (72) unter Verwendung des zweiten Treibriemens (73) in Treibverbindung stehen; und
das linke Hinterrad-Lenkteilsystem (23) unter Verwendung der linken hinteren Kupplung (8) mit dem linken hinteren Getrieberad (71) verbunden ist und das rechte Hinterrad-Lenkteilsystem (24) unter Verwendung der rechten hinteren Kupplung (9) mit dem rechten hinteren Getrieberad (72) verbunden ist.

4. Fahrzeuglenkvorrichtung nach Anspruch 3, wobei ein Wirkdurchmesser von mindestens einem von dem linken hinteren Getrieberad (71) und dem rechten hinteren Getrieberad (72) variabel ist.

5. Fahrzeuglenkvorrichtung nach Anspruch 4, wobei die Hinterrad-Lenkgetriebebaugruppe (7) ferner ein Justierungsgetrieberad (74) umfasst, das dafür gestaltet ist, eine Spannung des zweiten Treibriemens (73) zu justieren, und das linke hintere Getrieberad (71), das rechte hintere Getrieberad (72) und das Justierungsgetrieberad (74) unter Verwendung des zweiten Treibriemens (73) in Treibverbindung stehen.

6. Fahrzeuglenkvorrichtung nach Anspruch 5, wobei ein Wirkdurchmesser des Justierungsgetrieberads (74) variabel ist.

7. Fahrzeuglenkvorrichtung nach einem der Ansprüche 1 bis 6, wobei das obere Lenksystem (1) einen oberen Lenkantriebsmotor (11) umfasst.

8. Fahrzeuglenkvorrichtung nach einem der Ansprüche 1 bis 7, wobei jedes Getrieberad eine erste Kegelscheibe (301), eine zweite Kegelscheibe (302), eine Getriebewelle (303) und eine Kegelscheiben-Antriebsvorrichtung (304) umfasst, wobei die erste Kegelscheibe (301) und die zweite Kegelscheibe (302) auf die Getriebewelle (303) aufgehülst sind und kegelige Oberflächen der ersten Kegelscheibe (301) und der zweiten Kegelscheibe (302) einander gegenüberliegen; die Kegelscheiben-Antriebsvorrichtung (4) dafür gestaltet ist, einen Abstand zwischen der ersten Kegelscheibe (301) und der zweiten Kegelscheibe (302) zu steuern, um einen Wirkdurchmesser des Getrieberads zu ändern; und
das Getrieberad das Zwischengetrieberad (31), das linke vordere Getrieberad (32), das rechte vordere Getrieberad (33), das linke hintere Getrieberad (71), das rechte hintere Getrieberad (72) oder das Justierungsgetrieberad (74) ist.

9. Fahrzeuglenkvorrichtung nach einem der Ansprüche 1 bis 8, wobei die Fahrzeuglenkvorrichtung ferner eine Steuerung umfasst und die Steuerung für Folgendes gestaltet ist: wenn sich das linke Vorderrad-Lenkteilsystem (21) und das rechte Vorderrad-Lenkteilsystem (22) in einem energiewirksamen Zustand befinden, Steuern der Zwischenkupplung (4), der linken vorderen Kupplung (5) und der rechten vorderen Kupplung (6), in einem entkuppelten Zustand zu sein; und
die Steuerung ferner dafür gestaltet ist, das linke Vorderrad-Lenkteilsystem (21) und das rechte Vorderrad-Lenkteilsystem (22) zu steuern, jeweils Lenkaktionen entsprechender Räder durchzuführen.

10. Fahrzeuglenkvorrichtung nach Anspruch 9, wobei die Steuerung ferner für Folgendes gestaltet ist: wenn sich nur eines von dem linken Vorderrad-Lenkteilsystem (21) und dem rechten Vorderrad-Lenkteilsystem (22) in einem Energieausfallzustand befindet, Steuern der Zwischenkupplung (4), in einem entkuppelten Zustand zu sein, und Steuern der linken vorderen Kupplung (5) und der rechten vorderen Kupplung (6), in einem eingekoppelten Zustand zu sein; und
die Steuerung ferner dafür gestaltet ist, ein energiewirksames Lenkteilsystem zu steuern, eine Lenkaktion eines entsprechenden Rads durchzuführen und unter Verwendung der Vorderrad-Lenkgetriebebaugruppe (3) Energie auf ein energieunwirksames Lenkteilsystem zu übertragen, so dass das energieunwirksame Lenkteilsystem eine Lenkaktion eines entsprechenden Rads durchführt.

11. Fahrzeuglenkvorrichtung nach einem der Ansprüche 8 bis 10, wobei die Steuerung ferner für Folgendes gestaltet ist: wenn sich sowohl das linke Vorderrad-Lenkteilsystem (21) als auch das rechte Vorderrad-Lenkteilsystem (22) in einem Energieausfallzustand befinden und sich der obere Lenkantriebsmotor (11) in dem oberen Lenksystem (1) in einem energiewirksamen Zustand befindet, Steuern sowohl der Zwischenkupplung (4) als auch der linken vorderen Kupplung (5) als auch der rechten vorderen Kupplung (6), in einem eingekuppelten Zustand zu sein; und
die Steuerung ferner dafür gestaltet ist, den oberen Lenkantriebsmotor (11) in dem oberen Lenksystem (1) zu steuern, unter Verwendung der Vorderrad-Lenkgetriebebaugruppe (3) Energie auf das linke Vorderrad-Lenkteilsystem (21) und das rechte Vorderrad-Lenkteilsystem (22) zu übertragen, um Lenkaktionen eines linken Vorderrads und eines rechten Vorderrads durchzuführen.

12. Fahrzeuglenkvorrichtung nach einem der Ansprüche 8 bis 11, wobei die Steuerung ferner für Folgendes gestaltet ist: wenn sich sowohl das linke Vorderrad-Lenkteilsystem (21) als auch das rechte Vorderrad-Lenkteilsystem (22) in einem Energieausfallzustand befinden, und sich der obere Lenkantriebsmotor (11) in dem oberen Lenksystem (1) in einem Leistungsausfallzustand befindet, Steuern sowohl der Zwischenkupplung (4) als auch der linken vorderen Kupplung (5) als auch der rechten vorderen Kupplung (6), in einem eingekuppelten Zustand zu sein.

13. Fahrzeuglenkvorrichtung nach einem der Ansprüche 10 bis 12, wobei die Steuerung ferner dafür gestaltet ist, Änderungen der Wirkdurchmesser des linken vorderen Getrieberads (32) und des rechten vorderen Getrieberads (33) zu steuern, um eine Getriebeübersetzung des linken vorderen Getrieberads (32) zu dem rechten vorderen Getrieberad (33) zu ändern, so dass verschiedene Lenkwinkel des linken Vorderrads und des rechten Vorderrads realisiert werden.

14. Fahrzeug, wobei das Fahrzeug die Fahrzeuglenkvorrichtung nach einem der Ansprüche 1 bis 13 umfasst.

## Revendications

1. Appareil de direction de véhicule, comprenant un système de direction supérieur (1), un système de direction inférieur (2), un ensemble de transmission de direction de roue avant (3), un embrayage intermédiaire (4), un embrayage avant gauche (5) et un embrayage avant droit (6),
l'ensemble de transmission de direction de roue avant (3) comprenant une roue de transmission intermédiaire (31), une roue de transmission avant gauche (32), une roue de transmission avant droite (33) et une première courroie de transmission (34) ; et la roue de transmission intermédiaire (31), la roue de transmission avant gauche (32) et la roue de transmission avant droite (33) étant en liaison de transmission au moyen de la première courroie de transmission (34) ;
le système de direction inférieur (2) comprenant un sous-système de direction de roue avant gauche (21) et un sous-système de direction de roue avant droite (22) ; et
le système de direction supérieur (1) étant relié à la roue de transmission intermédiaire (31) au moyen de l'embrayage intermédiaire (4), le sous-système de direction de roue avant gauche (21) étant relié à la roue de transmission avant gauche (32) au moyen de l'embrayage avant gauche (5) et le sous-système de direction de roue avant droite (22) étant relié à la roue de transmission avant droite (33) au moyen de l'embrayage avant droit (6), et
un diamètre de fonctionnement de la roue de transmission avant gauche (32) et/ou de la roue de transmission avant droite (33) étant variable.

2. Appareil de direction de véhicule selon la revendication 1, dans lequel un diamètre de fonctionnement de la roue de transmission intermédiaire (31) est variable.

3. Appareil selon l'une quelconque des revendications 1 et 2, dans lequel le système de direction inférieur (2) comprend en outre un sous-système de direction de roue arrière gauche (23) et un sous-système de direction de roue arrière droite (24) ; l'appareil de direction de véhicule comprenant en outre un ensemble de transmission de direction de roue arrière (7), un embrayage arrière gauche (8) et un embrayage arrière droit (9) ; l'ensemble de transmission de direction de roue arrière (7) comprenant une roue de transmission arrière gauche (71), une roue de transmission arrière droite (72) et une seconde courroie de transmission (73) ; et la roue de transmission arrière gauche (71) et la roue de transmission arrière droite (72) étant en liaison de transmission au moyen de la seconde courroie de transmission (73) ; et
le sous-système de direction de roue arrière gauche (23) étant relié à la roue de transmission arrière gauche (71) au moyen de l'embrayage arrière gauche (8) et le sous-système de direction de roue arrière droite (24) étant relié à la roue de transmission arrière droite (72) au moyen de l'embrayage arrière droit (9).

4. Appareil de direction de véhicule selon la revendication 3, dans lequel un diamètre de fonctionnement de la roue de transmission arrière gauche (71) et/ou de la roue de transmission arrière droite (72) est variable.

5. Appareil de direction de véhicule selon la revendication 4, dans lequel l'ensemble de transmission de direction de roue arrière (7) comprend en outre une roue de transmission de réglage (74) configurée pour régler une tension de la seconde courroie de transmission (73), la roue de transmission arrière gauche (71), la roue de transmission arrière droite (72) et la roue de transmission de réglage (4) étant en liaison de transmission au moyen de la seconde courroie de transmission (73).

6. Appareil de direction de véhicule selon la revendication 5, dans lequel un diamètre de fonctionnement de la roue de transmission de réglage (74) est variable.

7. Appareil de direction de véhicule selon l'une quelconque des revendications 1 à 6, dans lequel le système de direction supérieur (1) comprend un moteur d'entraînement de direction supérieur (11).

8. Appareil de direction de véhicule selon l'une quelconque des revendications 1 à 7, dans lequel chaque roue de transmission comprend un premier disque conique (301), un second disque conique (302), un arbre de transmission (303) et un appareil d'entraînement de disque conique (304), le premier disque conique (301) et le second disque conique (302) étant manchonnés sur l'arbre de transmission (303), et les surfaces coniques du premier disque conique (301) et du second disque conique (302) étant opposées l'une à l'autre ;
l'appareil d'entraînement de disque conique (4) étant configuré pour commander une distance entre le premier disque conique (301) et le second disque conique (302) afin de modifier un diamètre de fonctionnement de la roue de transmission ; et
la roue de transmission étant la roue de transmission intermédiaire (31), la roue de transmission avant gauche (32), la roue de transmission avant droite (33), la roue de transmission arrière gauche (71), la roue de transmission arrière droite (72) ou la roue de transmission de réglage (74).

9. Appareil de direction de véhicule selon l'une quelconque des revendications 1 à 8, l'appareil de direction de véhicule comprenant en outre un dispositif de commande, le dispositif de commande étant configuré pour : lorsque le sous-système de direction de roue avant gauche (21) et le sous-système de direction de roue avant droite (22) sont dans un état de haut rendement de puissance, commander l'embrayage intermédiaire (4), l'embrayage avant gauche (5) et l'embrayage avant droit (6) pour qu'ils soient dans un état débrayé ; et
le dispositif de commande étant en outre configuré pour commander le sous-système de direction de roue avant gauche (21) et le sous-système de direction de roue avant droite (22) afin d'effectuer respectivement les actions de direction des roues correspondantes.

10. Appareil de direction de véhicule selon la revendication 9, dans lequel le dispositif de commande est en outre configuré pour : lorsqu'un seul des sous-systèmes de direction de roue avant gauche (21) et de direction de roue avant droite (22) est dans un état de perte de puissance, commander l'embrayage intermédiaire (4) pour qu'il soit dans un état débrayé et commander l'embrayage avant gauche (5) et l'embrayage avant droit (6) pour qu'ils soient dans un état embrayé ; et
le dispositif de commande est en outre configuré pour commander un sous-système de direction à haut rendement de puissance afin d'effectuer une action de direction d'une roue correspondante et pour transférer la puissance vers un sous-système de direction à bas rendement de puissance au moyen de l'ensemble de transmission de direction de roue avant (3), de telle sorte que le sous-système de direction à bas rendement de puissance effectue une action de direction d'une roue correspondante.

11. Appareil de direction de véhicule selon l'une quelconque des revendications 8 à 10, dans lequel le dispositif de commande est en outre configuré pour : lorsque le sous-système de direction de roue avant gauche (21) et le sous-système de direction de roue avant droite (22) sont l'un et l'autre dans un état de perte de puissance et que le moteur d'entraînement de direction supérieur (11) dans le système de direction supérieur (1) est dans un état de haut rendement de puissance, commander l'embrayage intermédiaire (4), l'embrayage avant gauche (5) et l'embrayage avant droit (6) pour qu'ils soient tous dans un état embrayé ; et
le dispositif de commande est en outre configuré pour commander le moteur d'entraînement de direction supérieur (11) dans le système de direction supérieur (1) pour transférer la puissance vers le sous-système de direction de roue avant gauche (21) et le sous-système de direction de roue avant droite (22) au moyen de l'ensemble de transmission de direction de roue avant (3) afin d'effectuer des actions de direction d'une roue avant gauche et d'une roue avant droite.

12. Appareil de direction de véhicule selon l'une quelconque des revendications 8 à 11, dans lequel le dispositif de commande est en outre configuré pour : lorsque le sous-système de direction de roue avant gauche (21) et le sous-système de direction de roue avant droite (22) sont l'un et l'autre dans un état de perte de puissance et que le moteur d'entraînement de direction supérieur (11) dans le système de direction supérieur (1) est dans un état de perte de puissance, commander l'embrayage intermédiaire (4), l'embrayage avant gauche (5) et l'embrayage avant droit (6) pour qu'ils soient tous dans un état embrayé.

13. Appareil de direction de véhicule selon l'une quelconque des revendications 10 à 12, dans lequel le dispositif de commande est en outre configuré pour commander des variations des diamètres de fonctionnement de la roue de transmission avant gauche (32) et de la roue de transmission avant droite (33) afin de modifier un rapport de transmission de la roue de transmission avant gauche (32) à la roue de transmission avant droite (33) de telle sorte que différents angles de direction de la roue avant gauche et de la roue avant droite soient mis en oeuvre.

14. Véhicule, le véhicule comprenant l'appareil de direction de véhicule selon l'une quelconque des revendications 1 à 13.
